# EUROPEAN PATENT APPLICATION

(11) **EP 4 738 713 A1**
(43) Date of publication of application: **06.05.2026**
(21) Application number: 25211411.1
(22) Date of filing: 27.10.2025
(51) Int. Cl.: H04B 1/16

(54) **HETEROGENEOUS MULTI-CHANNEL SCANNING FOR WIRELESS DEVICES**

(30) Priority: 31.10.2024 US 202418934016
(71) Applicant: Avago Technologies International Sales Pte. Limited, Singapore 768923 (SG)
(72) Inventor: Lee, Dong-U, Irvine, CA, 92618 (US); Batra, Arun, Irvine, CA, 92618 (US); Shah, Nirav, Irvine, CA, 92618 (US); Zhou, Jun, Irvine, CA, 92618 (US); Radhakrishnan, Rathnakumar, Irvine, CA, 92618 (US); Mou, Sheng, Irvine, CA, 92618 (US); Xu, Shengyang, Irvine, CA, 92618 (US); Mak, Siukai, Irvine, CA, 92618 (US); Forbes, Marcellus, Irvine, CA, 92618 (US); Kim, Hea Joung, Irvine, CA, 92618 (US)
(74) Representative: Grünecker Patent- und Rechtsanwälte PartG mbB

(57) **Abstract**

This application discloses wireless devices, multi-scan PHY blocks thereof, and associated methods. A multi-scan PHY block might include a first number of front-end blocks and a second number of back-end blocks. The multi-scan PHY block might enable detection by the front-end blocks of packets on a plurality of wireless channels and demodulation by the back-end blocks of the packets on the plurality of wireless channels without requiring a separate back-end block for each wireless channel.

## Description

### Technical Field

This disclosure relates generally to wireless devices and more specifically to wireless devices having a multi-channel scanning PHY block.

### Background

In wireless systems, including but not limited to Wi-Fi systems, access points (APs) typically transmit beacons to neighboring devices. These beacons can be used for network discovery; roaming, *e.g.,* switching to a different AP with a stronger received signal strength indicator (RSSI); indoor and/or outdoor location services, *e.g.,* using the beacons' RSSIs, time-of-arrivals, and/or angle-of-arrivals, and the like. APs generally transmit beacons for various purposes (*e.g.,* to allow wireless devices such as phones, computers, etc. to discover and connect to a wireless network), and beacons often are transmitted (*e.g.,* by different APs in proximity to one another) on different channels. Traditional wireless devices with single-channel radios have to scan beacons on multiple channels in a time-multiplexed manner, resulting in slow scan times, impacting the quality of such services. Multi-channel radios enable the potential of concurrent scanning, but conventional implementations of multi-channel radios generally involves individual copies of receivers for each channel, which can increase the area of the PHY block and/or hardware costs.

### Brief Description of the Drawings

Fig. 1 is a block diagram of a PHY block of a wireless device in accordance with some embodiments.
Fig. 2 is a block diagram of a PHY block of a wireless device in accordance with some embodiments.
Fig. 3 is a flow diagram illustrating a method of performing multi-channel scanning in accordance with some embodiments.
Fig. 4A is a block diagram showing certain components of a PHY block of a wireless device in accordance with some embodiments.
Figs. 4B and 4C are block diagrams illustrating front-end blocks in accordance with various embodiments.
Fig. 5 is a flow diagram illustrating a method demodulating a signal accordance with some embodiments.
Fig. 6 illustrates a wireless frame in accordance with some embodiments.
Fig. 7 is a flow diagram illustrating a method of handling a demodulation contention in accordance with some embodiments.
Fig. 8 is a timing diagram that illustrates a technique for handling a demodulation contention using channel deprioritization in accordance with some embodiments.
Fig. 9 is a block diagram of a PHY block with a buffer in accordance with some embodiments.
Fig. 10 is a timing diagram illustrating a technique of buffering a signal to handle a demodulation contention in accordance with some embodiments.
Fig. 11 is a block diagram of a wireless device in accordance with some embodiments.

### Detailed Description

In a set of embodiments, a PHY block of a wireless device includes multiple front-end blocks (FE) multiplexed independently to multiple back-end blocks (BE). In a general sense, each FE includes a packet detector, and each BE includes a demodulator. In an aspect of some embodiments, each of the FEs can detect packets on any of a plurality of channels across a wireless spectrum (*e.g.*, one or more of the typical Wi-Fi spectra, such as the 2.4 GHz band (IEEE 802.11b/g/n/ax), 5 GHz band (IEEE 802.11a/n/ac/ax), 6 GHz band (IEEE 802.11a/n/ac/ax), etc., and can detect packets on signals with different modulations, *e.g.,* orthogonal frequency division multiplexing (OFDM) modulation and direct sequence spread spectrum (DSSS) modulation.

In another aspect of some embodiments, each of the BEs can demodulate signals having at least one such modulation. As used herein, the term "wireless device" refers to any device that is capable of sending or receiving data using wireless signals. Examples include, without limitation, devices with Wi-Fi capabilities, such as wireless phones, tablet computers, personal computers (including but not limited to laptop computers), Wi-Fi-enabled peripherals and devices (including but not limited to smart home devices); devices with cellular capabilities, including without limitation the devices above, and any other devices with any sort of wireless capability. Although many of the examples in this disclosure refer to Wi-Fi devices for illustrative purposes, a skilled artisan will appreciate that embodiments are not limited to these examples.

As used herein, the terms "PHY" and "PHY block" refer to a Physical Layer section of a wireless device that is responsible for transmitting and receiving raw data over a wireless medium, such as radio waves. In networking, the PHY layer is the lowest layer of the Open Systems Interconnection (OSI) model and is responsible for defining the physical means of transmitting data between devices. In some embodiments, the PHY block is implemented using hardware, firmware, or a combination thereof. The PHY block can be integrated into a single chip or module, such as a wireless local area network (WLAN, also referred to herein as Wi-Fi, including but not limited to IEEE 802.11 protocols) chip or a cellular modem.

In general, a PHY block can include various components, which can comprise hardware circuitry, firmware, or both (which, as described in further detail below, this disclosure refers to collectively as "logic") that is responsible for managing the physical aspects of wireless communication, including, without limitation, frequency selection and tuning, modulation and demodulation of a wireless signal, power amplification and control, signal filtering and conditioning, and/or error correction and detection. The PHY block typically communicates with the Media Access Control (MAC) layer, which manages the data link layer and provides the interface between the PHY block and higher-level functionality in the wireless device.

In particular, as noted above, a PHY block can include one or more FEs and one or more BEs. The term "FE" (front-end block) is used broadly herein to refer to any component(s) of the PHY that comprise logic and/or functionality to detect packets on RF signals. Correspondingly, the term "BE" (back-end block) is used broadly herein to refer any component(s) that comprise logic and/or functionality demodulate such signals; in an aspect of some embodiments, this demodulation can recover packets (or portions of packets) from such signals. Specific examples of FE and BE components are described in further detail below.

As used herein, the term "channel" is used in the conventional sense, *i.e.,* to refer to a specific frequency range within the relevant band for the applicable wireless technology, *e.g.,* in the context of 802.11g/n/ac/ax, each of the channels in the applicable frequency bands (*e.g.,* the 2.4 GHz band, the 5 GHz band, and the 6 GHz band). The term "signal" is used herein to refer to a carrier frequency modulated to carry data. As used herein, the term "modulation" is used broadly to refer to a technique of modifying one or more carrier waves to encode information thereon, allowing the information to be transmitted wirelessly (*e.g.,* OFDM, DSSS etc.). A signal is considered to be sent on a channel when the carrier frequency of the signal corresponds to the frequency band assigned to the channel (*e.g.,* the carrier frequency might be the center frequency of the band assigned to the channel).

The term "demodulate" is used herein to include operations conventionally involved in demodulating a modulated signal and can also include operations conventionally involved in decoding the demodulated signal, *e.g.,* to obtain the bits of a MAC frame encoded in the modulated signal. For example, the PHY block is responsible for detecting a signal and demodulating the detected signal to recover a packet. In wireless technology, the term, "packet" typically refers to the data unit that is transmitted over the wireless medium, including the payload (user data) and the headers (control information). The packet is the basic unit of data transmission and generally comprises a payload (user data) headers (control information, such as source and destination addresses, sequence numbers, etc.), and a trailer (optional, e.g., error-checking data).

Conversely, in wireless technology, the term "frame" is a more specific term that refers to the formatted data unit that is transmitted over the wireless medium, including the packet and additional control information. A frame typically includes a preamble (a sequence of bits that indicates the start of the frame), a header (control information, such as frame type, source and destination addresses, etc.), a payload (the packet, including user data and headers), a trailer (optional, e.g., error-checking data), and/or a postamble (a sequence of bits that indicates the end of the frame). Accordingly, this disclosure uses the term "frame" to refer to a MAC frame, and the term "packet" to refer to the payload of the frame. In general, however, those terms are used interchangeably herein except where the context dictates otherwise. For instance, the term "packet filter" (and derivatives thereof) is used broadly herein to refer to a process by which either a packet or a frame is evaluated to determine whether the packet/frame should be dropped (or demodulation of the packet should be stopped), similar in some aspects to the usage of "packet filter" in the network switching context. Similarly, the term "packet detector" is used to describe a component that performs carrier sensing (*e.g.,* as described below), for example by detecting a packet (*e.g.,* the preamble of a frame).

The term "beacon" is used herein to refer to a frame that is transmitted by a wireless device-often a central device in a wireless network, such as a router or access point-to announce its presence and provide information about the network. Merely by way of example, a beacon can be a periodic transmission that is sent by the wireless device to advertise its existence and to provide information about the network, which can include, without limitation, as network name (SSID), channel number, data rate, authentication method, encryption method, and/or the like. Beacons are used in various wireless technologies, including without limitation Wi-Fi, Bluetooth, and Zigbee.

Certain embodiments are configured to handle beacon frames in a novel manner, given the relative sparsity of beacons. In Wi-Fi, for example, multiple APs might transmit beacons on different channels. Assuming a typical beacon interval of 102.4 ms and a packet duration of 2 ms, the beacon airtime of an AP is approximately 2%. Consequently, the probability of a demodulation contention is low, although, as described below, non-zero. As used herein, the term "demodulation contention" describes any situation in which a given receiver (or demodulator) cannot demodulate a beacon because it is busy demodulating another beacon. An example of such a situation is a "beacon arrival overlap," such as when two beacons arrive on different channels in such proximity that the demodulator is in the process of demodulating the first beacon when the second beacon arrives and therefore cannot process the second beacon.

As a result, certain embodiments can employ relatively fewer BEs, which can allow for a relatively smaller PHY block and/or lower hardware costs. More specifically, as described further below, a heterogeneous PHY can include a number (referred to herein as *M*) of parallel FEs multiplexed independently with a number (referred to herein as *N*) of BEs. In one aspect of some embodiments, the number of FEs is greater than or equal to the number of BEs (*i.e., M* ≥ *N*). In particular embodiments, *M > N.*

Because the probability of a demodulation contention is non-zero, certain embodiments provide techniques for handling such contention. Examples of such techniques are described in detail below but can include, without limitation, channel deprioritization, and frame buffering. Further, in some embodiments, a BE can include a packet filter, which has logic to enable early termination of the demodulation of unwanted packets, which can free up the BE for other channels and/or signals. Certain embodiments also enable handling of demodulation contention, which can be periodic or non-periodic.

### Exemplary Embodiments

Certain exemplary embodiments are described below. Each of the described embodiments can be implemented separately or in any combination, as would be appreciated by one skilled in the art. Thus, no single embodiment or combination of embodiments should be considered limiting. Moreover, any of the embodiments described above

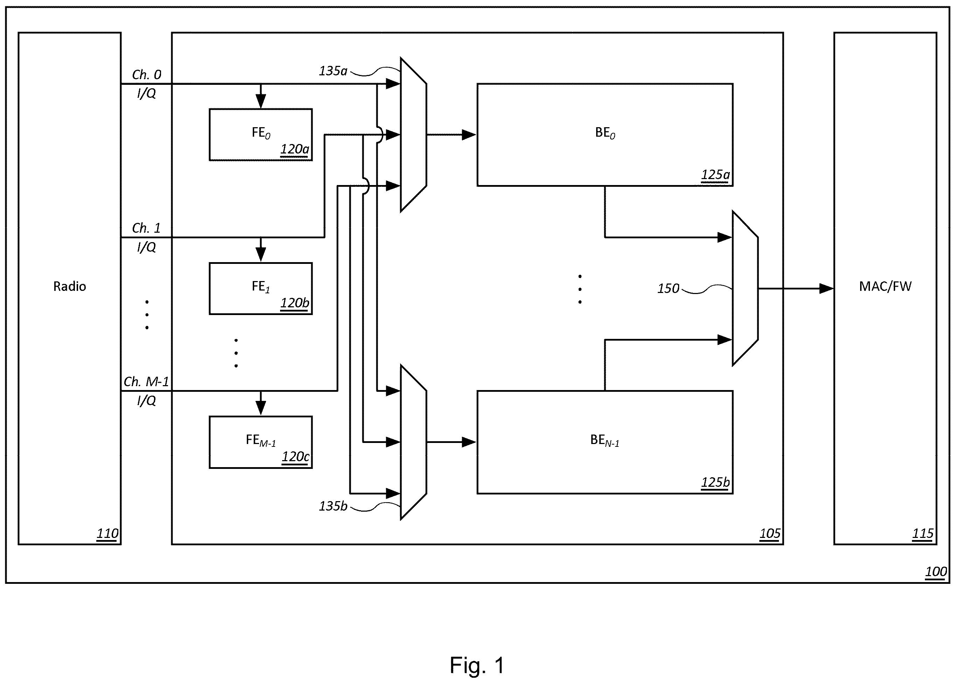

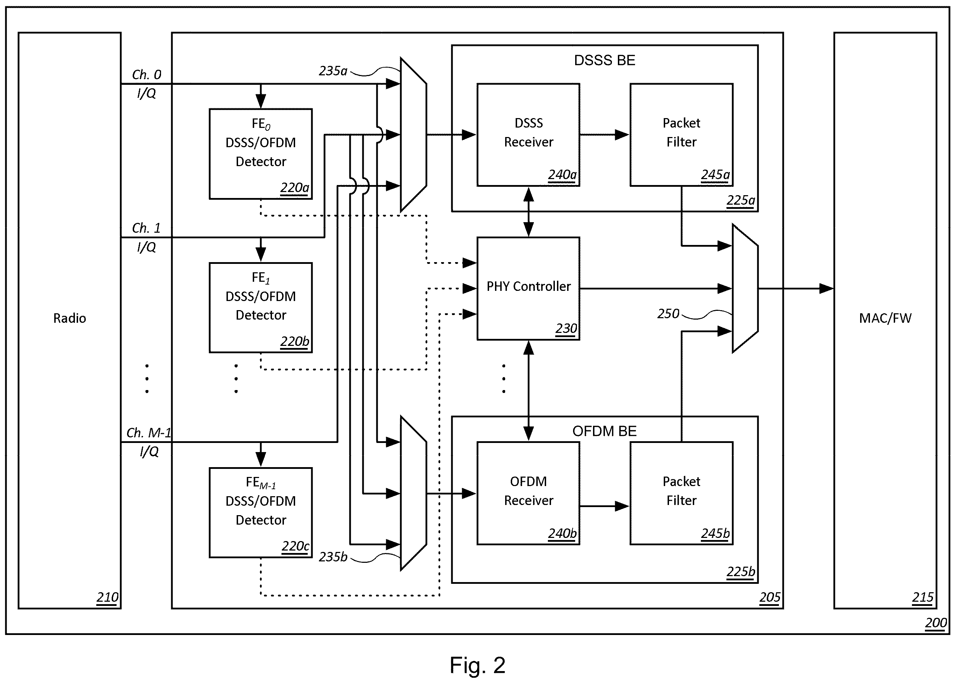

Fig. 1 illustrates a wireless device 100 having multi-scan PHY 105, in accordance with a set of embodiments. For simplicity, Fig. 1 (as well as Fig. 2, discussed below) illustrates only the receive chain of the PHY 105, and the description herein largely is limited to the receive chain of the PHY 105 as well. The skilled artisan should appreciate, however, that PHYs in accordance with various embodiments will also include a transmit chain, which can, in some embodiments, be implemented in a conventional manner known to those skilled in the art.

As used herein, the term "multi-scan" refers to a PHY having the ability to scan (*i.e.,* detect and/or demodulate packets sent on) multiple channels for beacons without requiring a BE for each channel. In addition to the PHY 105, the wireless device 100 comprises a radio 110 and a MAC layer 115 and/or firmware of the wireless device 100 (which are referred to collectively herein as the MAC layer, although in some embodiments the MAC layer might be implemented in part or wholly by hardware). While the radio 110 and MAC layer 115 are illustrated for illustrative purposes, they are not described in detail herein and generally can be implemented in a conventional manner known to those skilled in the art. In particular aspects, the radio 110 can be a multichannel radio.

The multi-scan PHY 105 of Fig. 1 includes a plurality of FEs 120 in communication with a plurality of BEs 125. In the embodiments illustrated by Fig. 1, each of the BEs 125 has a corresponding multiplexer 135, each of which receives input from all of the FEs 120. Each of the BEs 125 provides output to the MAC layer 115 through a MAC interface 150. As noted above, this disclosure refers to the number of FEs 120 using the signifier *M* and the number of BEs 125 using the signifier *N.* Notably, as illustrated in Fig. 1 *M* > *N.* Using techniques described in further detail below, the FEs 120 can detect packets simultaneously on *M* channels (Ch. 0, Ch. 1, ..., Ch. *M-1*), and the PHY 105 uses only *N* BEs 125. As noted above, this provides the ability to scan all channels simultaneously without requiring the larger footprint of one BE for each channel.

While Fig. 1 illustrates three FEs 120 and two BEs 125, embodiments can include any number of FEs 120 and BEs 125 respectively. As noted, however, in some embodiments, the number *M* of FEs 120 is greater than or equal to the number *N* of BEs 125. In the illustrated embodiment, the number of FEs 120 corresponds to the number of channels to be scanned simultaneously, while the number of BEs 125 corresponds to the number of receivers that can process the received signals. There may be multiple BEs 125 with logic to process a given modulation, or there may be a single BE 125 with the logic to process that particular modulation. In some embodiments, one modulation might be supported by multiple BEs 125, while another modulation might be supported by only one BE 125. It should be appreciated, however, that there could be any number of FEs 120 and/or BEs 125 in accordance with different embodiments. For example, some embodiments might include more than one BE 125 for each modulation supported, for example to support parallel signals having the same (or similar) modulation on multiple channels.

For example, turning to Fig. 2, wireless device 200 includes a more specific example of a multi-scan PHY 205. Fig. 2 uses reference numbers similar to those of Fig. 1 to refer to similar components, and while some components are described in further detail below, the components of Fig. 2 generally perform in similar fashion to their counterparts on Fig. 1.

The PHY 205 includes *M* FEs 220, which, in this example, each comprise a respective packet detector that is configured to (*e.g.,* includes logic to) detect signals with different modulations, including but not limited to OFDM or DSSS, that comply with various standards, *e.g.,* 802.11 and/or proprietary modulations. Such packets can include, but are not limited to, beacon packets (or, more properly, beacon frames), and the discussion of packet detection and handling herein necessarily includes the detection and handling of such beacon frames. In one sense, packet detection can be considered "carrier sensing," *e.g.,* by detecting the preamble of a frame modulated on the carrier signal.

The PHY 205 also includes *N* BEs 225, each comprising a receiver 240. For example, in Fig. 2, if *N*=2, one of the BEs 225a includes a receiver 240a that is configured to (*e.g.,* includes logic to) demodulate and recover packets from a DSSS signal, and the other BE 225b includes a receiver 240b that is configured to (*e.g.,* includes logic to) demodulate and recover packets from an OFDM-modulated signal. The PHY 205 also includes a PHY controller 230 that manages communications between the FEs 220 and the BEs 225. In the embodiments illustrated by Fig. 2, each of the BEs includes a receiver 240 and a corresponding packet filter 245. As used herein, the term "receiver" is used broadly to include any component with logic to demodulate a signal, as those terms are used herein; the term "demodulator" is sometimes used herein to refer to a receiver (or portion thereof) that performs the demodulation.

As with Fig. 1, the number of FEs 220 and BEs 225 illustrated by Fig. 2 is exemplary, rather than limiting, in nature. For example, a PHY configured to scan three channels in the 2.4GHz band might include three FEs 220 and two BEs 225, as shown in Fig.2. For example, in a device with a 2.4GHz radio and a 5GHz radio (or a radio that supports both 2.4GHz and 5GHz), the PHY 205 can be configured detect packets on three (or more) channels in the 2.4GHz band and three (or more) channels in the 5GHz band. The PHY 205 might therefore include six FEs 220. Since it might be more likely that such a device would detect more OFDM signals than DSSS signals, the PHY might have two (or more) BEs 225 with logic to demodulate OFDM signals and one (or more) BEs 225 with logic to demodulate DSSS signals. Based on the disclosure herein, a skilled artisan will appreciate that the respective number of FEs 220 and BEs 225 is discretionary and often can depend on implementation details.

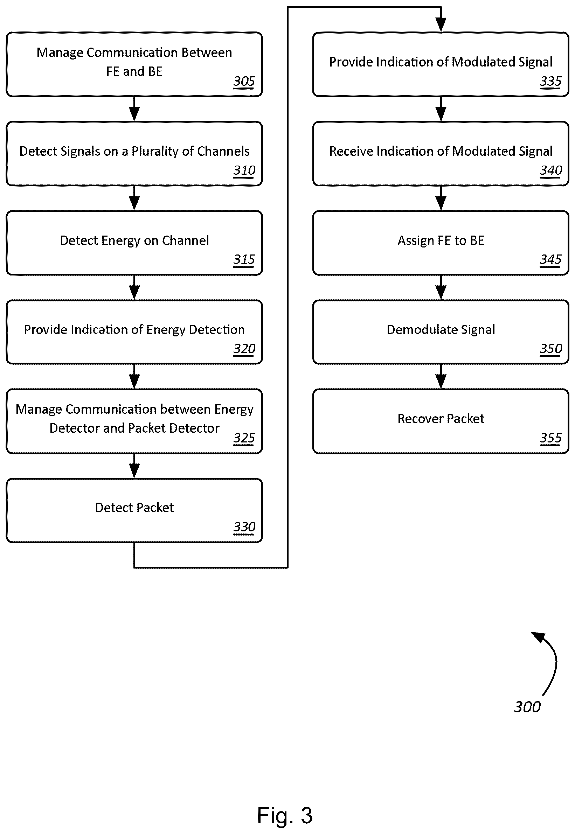

The operation of these components in accordance with certain embodiments will be described further below in the context of Figs. 3-9, but in a general sense, each FE 220 receives, *e.g.,* from the radio 210, a signal (each of which can include, as illustrated and as known in the art, an in-phase (I) component and a quadrature (Q) component), the signal. Simultaneously, the signal on each channel is routed to each of the multiplexers 235. If a given FE (*e.g.,* FE*₀* 220a) detects a packet in the received signal, it provides an indication (as shown by the dashed lines) to the PHY controller 230 that a packet has been detected and/or an indication of the modulation of the signal.

The PHY controller 230, upon receiving that indication, assigns the appropriate BE 225 (or, more precisely, in some embodiments, the appropriate receiver 240) to the detector 220 receiving the signal, and that signal is routed to the appropriate BE 225 for decoding and/or packet recovery. To illustrate, if FE*₀* 220a detects a packet on an OFDM-modulated signal on Ch. 0, it can provide an indication of such to the PHY controller 230, which assigns the OFDM BE 225b to FE*₀* 220a, and the multiplexer 235b delivers the signal to the OFDM BE 225b, at which point the OFDM demodulator 240a demodulates the signal and recovers the packet (or at least a portion thereof, as described in detail below).

In some embodiments, the PHY 205 (or a component thereof, such as a packet filter 245, PHY controller 230, etc.) can determine whether a receiver that receives a packet (or, more properly, a frame) should demodulate the entire packet, *e.g.,* using techniques described in further detail below. If, for example, the portion of the demodulated data meets a termination condition, the receiver terminates the packet (*i.e.,* terminates demodulation of the packet) early and is ready to receive another packet. On the other hand, if it determined that the entire packet should be demodulated (*e.g.,* if no set of the demodulated bits of the packet ever meets a termination condition), the receiver (*e.g.,* 240b) demodulates the entire packet, and, in some embodiments, delivers the demodulated packet to the corresponding packet filter (*e.g.,* in the current example, packet filter 245b). In such embodiments, the packet filter 245b (or another component, such as the PHY controller 230) determines whether the packet should be delivered to the MAC layer 215. If so, the BE 225 delivers the packet to the MAC layer 215. If not, the BE 225 discards the packet. In either case, the BE 225 is then ready to receive another packet. (In some embodiments, once the receiver 240 has delivered a demodulated packet to the packet filter 240, it is ready to receive another packet, regardless of the status of the packet filter 245). As noted above and described in further detail below, in some embodiments, the PHY 205 can handle demodulation contentions.

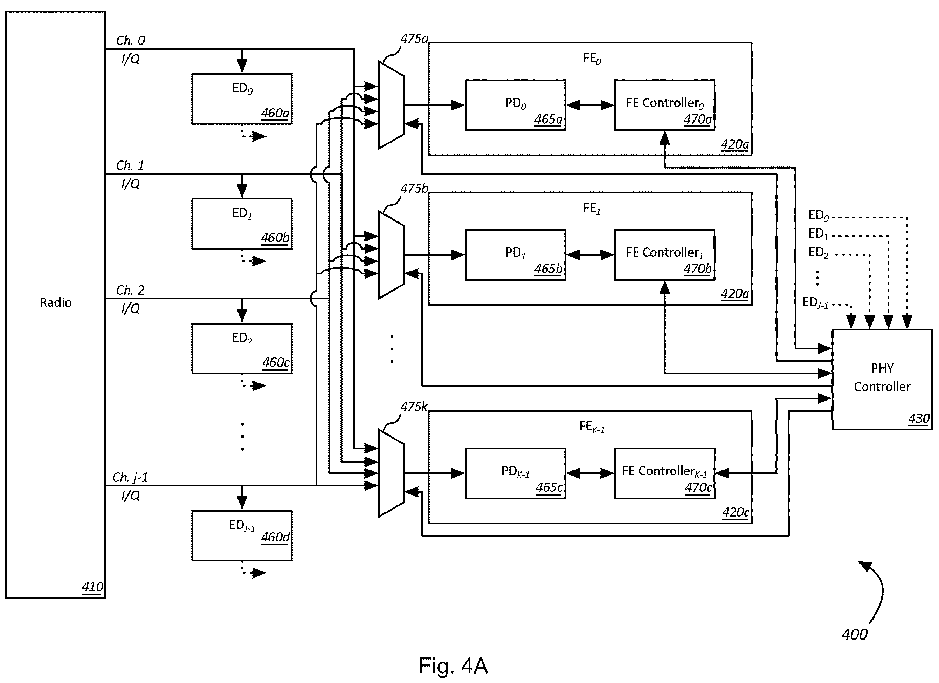

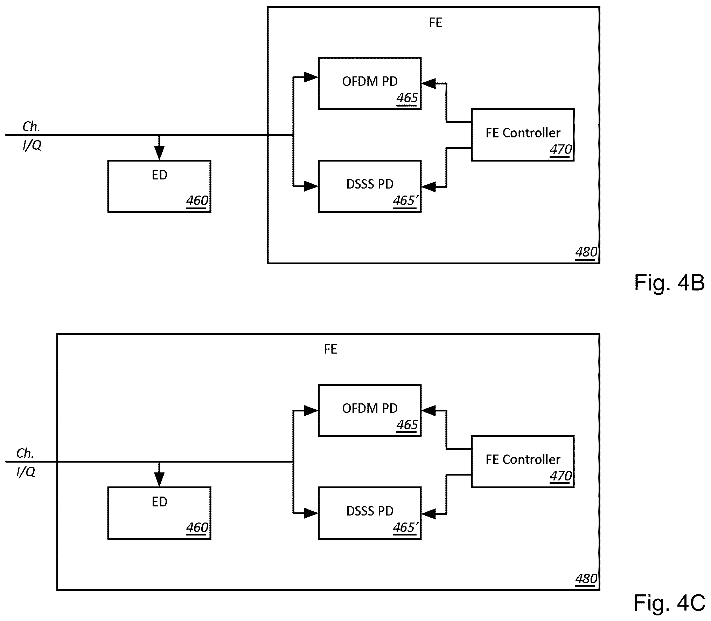

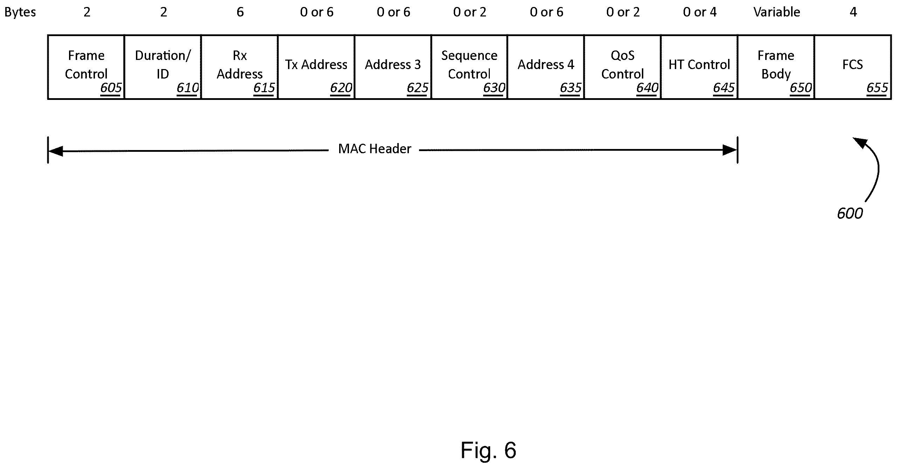

Fig. 3 illustrates a method 300 of detecting and handling packets in accordance with some embodiments. In some aspects, some or all of the operations of Fig. 3 (as well as those of Figs. 4 and 6) can be performed by a PHY and/or components thereof, including without limitation the PHY 105 of Fig. 1 and the PHY 205 of Fig. 2. For illustrative purposes, the methods of Figs. 3, 4, and 6 will be described by reference to components of Fig. 2, each of which can comprise logic to perform the respective operations of Fig. 2 attributed thereto, but the skilled artisan should appreciate that neither these methods nor any operations thereof are limited to any particular architectural framework.

At block 305, the method 300 comprises managing, *e.g.,* by a PHY controller 230 of a PHY block 205, communications between one or more front-end blocks and one or more back-end blocks. As described in further detail below, managing communications between the front-end blocks and the back-end blocks can include various operations, including without limitation assigning a BE 225 (and/or receiver 240) to a FE 220, causing a multiplexer 235 to route a signal to an appropriate BE 225, detecting and/or handling demodulation contentions on signals that are overlapping in time, and/or the like. Managing communication between the FEs 220 and BEs 225 can also include routing I/Q samples from a FE 220 to the appropriate BE 225, controlling enables and/or resets of one or more FEs 220 and/or BEs 225, and/or maintaining states of some or all of the FEs 220 and/or BEs 225. In some embodiments, managing communications between the FEs 220 and BEs 225 can comprise handling FE 220 or BE 225 error conditions or other such events.

At block 310, the method 300 comprises detecting, with a FE 220 of the PHY block 205 of a wireless device, one or more signals on a plurality of channels. In some embodiments, for example, as illustrated by Figs. 1 and 2, the PHY block 205 can comprise *M* FEs 220, each configured to detect signals on each of the plurality of channels; and *N* BEs 225. In some embodiments, *M* and *N* are integers, and in some embodiments, *M* ≥ *N. M* and *N* can be, but need not necessarily be greater than 1.

Some embodiments can perform a two-stage detection process. For example, in some embodiments, detecting one or more signals comprises detecting, *e.g.,* by one of the FEs 220, energy on one of the plurality of channels (block 315) and sensing a carrier, by the FE 220 and in response to detecting energy on channel, on that channel. In an aspect, that carrier signal might be modulated with one of a plurality of modulations (*e.g.,* OFDM, DSSS, etc.), (block 320). As noted above, carrier sensing is also referred to as packet detection and can comprise detecting the preamble of a frame, such as a beacon frame, among other techniques.

In some embodiments, the FE might comprise separate components (*e.g.,* circuits) that perform energy detection and packet detection, respectively, while in other cases, that functionality might be incorporated into a single component. For example, in some cases, a first stage (*e.g.,* circuit and/or logic) of detectors might perform energy detection on all channels, while a second stage (*e.g.,* circuit and/or logic) of detectors might perform packet detection (*e.g.,* detecting a preamble of a beacon or other frame) only on the channels on which energy is detected. In some cases, a given PHY 200 might have different numbers of energy detectors and packet detectors.

Merely by way of example, Fig. 4A illustrates a partial PHY 400 comprising *K* FEs, including FE 420a ... FE 420k, either of which might serve as any of the FEs 120 or 220 in the PHYs 105 and 205, respectively, described above (in which case, *K* can be equal to *M*). Fig. 4A illustrates multiple features that can be combined within various embodiments. For one thing, in the partial PHY 400 comprises *J* energy detectors 460a ... 460j that are separate from, and multiplexed (via multiplexers 475) to, the *K* FEs 420. Each of the FEs 420 comprises a packet detector 465 and a FE controller 470. In an aspect of some embodiments, an energy detector can include an automatic gain control (AGC circuit) that measures the power level of an incoming signal and determines if it falls within a certain range.

From these examples, the skilled artisan will recognize that, in various embodiments, a PHY *(e.g.,* the partial PHY 400 of Fig. 4A) can include an arbitrary number (*J*) of energy detectors 460 and an arbitrary number (*K*) of packet detectors 465 (and/or FEs 420). Each of the FEs 420 might comprise a packet detector 455. In some embodiments, *J* can be greater than or equal to *K.* In some embodiments, *K* might be equal to *M,* as that value is expressed, *e.g.,* in Figs. 1 and 2.

This can take advantage of the fact that energy detectors often are smaller and/or less expensive than packet detectors, thereby lowering the cost and/or area of the PHY. This can also take advantage of the fact that APs often will not be transmitting beacons on every channel all the time, and that packet detection on a given channel is unnecessary if no energy can be detected on that channel. In other cases, a FE might include one or more energy detectors and one or more packet detectors.

Returning to Fig. 3, therefore, after energy is detected on a channel (*e.g.,* by an energy detector 460) at block 315, the method 300 can comprise providing an indication of the energy detection (block 320). As shown by the broken lines on Fig. 4A, an energy detector 460 might provide data to the PHY controller 430 indicating that the energy detector has sensed energy on a channel. In some aspects, the method 300 comprises managing (*e.g.,* with a FE controller 470 and/or the PHY controller), operations of the FE controller's respective FE 420 and/or communications between the energy detectors 460 and the FEs 420 / packet detectors 465. Such management can include, without limitation, assigning one of the FEs 420 / packet detectors 465 to an energy detector 460 that has provided an indication of energy on the channel, *e.g.,* based on the detection of the energy and/or the availability of each of the FEs 420. As noted above, in some embodiments, each FE can detect packets on every channel; in such embodiments, any available FE 420 / packet detector 465 can be assigned to any channel on which energy has been detected. In other embodiments, certain FEs 420, or groups of FEs 420, might be reserved for assignment to particular energy detectors 460 and/or channels.

Such assignment can include routing signals from the indicated channel (and/or the indicating energy detector 460) to the FE 420 / packet detector 465 assigned to that energy detector 460 / channel and/or otherwise causing the signal from the channel to be delivered to one of the packet detectors.

In some embodiments, the packet detectors 460 can include logic to compute a likelihood/probability of a signal having a particular modulation. In an aspect, managing the FE 420 might comprise acting as an arbitrator to detect a modulation of the signal based, at least in part, on the likelihoods of various modulations. Information about the detected modulation can be communicated to the PHY controller 430 and used to select a BE to assign to the FE 420 to demodulate the signal (*e.g.,* as discussed elsewhere herein). The detection of the modulation might be based, at least in part, on various configured parameters of the FE 420. For example, the arbitrator (*e.g.,* FE controller 470) might be configured to bias the packet detecting circuit toward favoring a particular modulation and thus influence the determination by that packet detector (in some cases, to the point of deterministically detecting that particular modulation on every signal evaluated by that packet detector). The device firmware, PHY controller, etc. might set such parameters (or the logic might be hardwired into the FE controller 470) based on the channel, frequency band, and/or any other relevant factors. For example, a FE 420 detecting packets on a 5GHz channel might be biased toward the likelihood of the signal having OFDM modulation based on the knowledge that DSSS signals are not present on 5GHz channels.

As another example, managing the FE can include generating or collecting data about the signals received on a particular channel and/or providing that data (*e.g.,* to the PHY controller 430) from which channel occupancy information (*e.g.,* statistics on signals received across some or all of the channels) can be generated (*e.g.,* calculated, determined, etc.). This information can be provided, *e.g.,* to higher levels in the stack of the wireless device and can be used by, *e.g.,* the wireless device's firmware or software for various purposes, such as to configure parameters of an FE controller 470, identify blockers and/or optimize performance of a channel targeted by an AP, etc.

For simplicity, Fig. 4A omits illustration of any BEs, but the skilled artisan should appreciate that, in some embodiments, the partial PHY 400 can be substituted for the FE portions of the PHYs 100 and 200 described above. In some embodiments, the energy detectors 460 might be separate from, and/or multiplexed to, the FEs 420, as illustrated in Fig. 4A. This is not required, however; in some embodiments, the separation of the energy detection and packet detection circuits can be accomplished while the energy detectors 460 are incorporated in, or otherwise considered a part of, the FEs 420.

Another variation of some embodiments, as illustrated by Figs. 4B and 4C, is that each packet detector 465 could be replaced by multiple packet detectors 465 within a single FE 420. For instance, in some embodiments, there might be separate packet detectors 465 in a single FE 420 to detect packets having different modulations. Merely by way of example Fig. 4B illustrates a FE 480, with a DSSS packet detector 465 and an OFDM packet detector 465', each configured to detect a packet modulated with the respective modulation. In such embodiments. Each of the packet detectors 465 and 465' can attempt, simultaneously, in parallel, serially, etc. to detect a preamble on the signal, under management by the FE controller 470, and, in some cases, to provide information to the FE controller about the detection of the packet and/or the likelihood that the detected packet is modulated with a particular modulation. In Fig. 4B, the energy detector 460 that detected energy on the channel is not part of the FE 485. The FE 480 of Fig. 4C is similar, except that the ED 460 is incorporated within the FE 485.

Returning to Fig. 3, at block 335, the method comprises providing, *e.g.,* by the FE 225 that sensed the packet, an indication of the detection of the modulated signal, *e.g.,* to a PHY controller 230. In some cases, the indication can comprise data, *e.g.,* a message, sent from the FE 220 directly or indirectly to the PHY controller 230. In some embodiments, the indication can include an indication of some or all of the following: (1) the FE 220 that received the signal, (2) the presence and/or detection of the modulated signal, and/or (3) the type of modulation used to modulate the packet onto the carrier signal. At block 340, then, the method 300 can comprise receiving, *e.g.,* by the PHY controller 230, the indication of the modulated signal.

At block 345, the method 300 comprises assigning an appropriate BE 225 (or, in some cases, a component thereof, such as the receiver 240 of the appropriate BE 225) to the FE 220 that detected the packet. In an aspect, assigning the appropriate BE can be performed based at least in part on, and/or in response to, receiving the indication of the modulated signal. In another aspect, an "appropriate" receiver 240 or BE 225 can be a receiver 240 or BE 225 that is configured to (*e.g.,* comprises logic to) demodulate a packet modulated with the particular modulation detected and/or indicated by the FE 220.

In an aspect, assigning a BE 225 and/or receiver 240 to a FE causes all signals from that FE 220 to be received by that BE 225 and/or the corresponding receiver 240 until the BE 225 / FE 220 has been reassigned to another FE 220 or otherwise unassigned, *e.g.,* by the PHY controller 230. For example, in some cases, the PHY controller 230 might be configured to reassign (*e.g.,* might be programmed to reassign, might include logic to reassign, etc.) a BE 225 from a first FE 220 receiving a first signal (*e.g.,* FE*₀* 220a receiving a first signal on Ch. 0) a to a second FE 220 (*e.g.,* FE*₁* 220 receiving a second signal on Ch. 1) receiving a second signal having a higher RSSI than the first signal received by the first FE*₀* 220a, particularly if the first signal and the second signal both have a modulation that the BE 225 is able to demodulate (*e.g.,* two OFDM signals OFDM or two DSSS signals, etc.).

This assignment can take different forms in different embodiments. For example, in some embodiments assigning a BE (*e.g.,* 225a) to a particular FE (*e.g.,* 220a) can comprise configuring and/or programming a multiplexer 235 to route signals from that FE 220a to that BE 225a and/or receiver 240a. Alternatively and/or additionally, assigning a BE 225a to a particular FE 220a might comprise configuring and/or programming the assigned BE 225a / receiver 240a to receive signals only from the FE 220 to which it is assigned and/or to disregard signals received from other FEs 220b ... 220m.

At block 350, the method 300 comprises demodulating, *e.g.,* by a BE 225 and/or a receiver 240 thereof, the signal received from a FE 220 (*e.g.,* a signal from the FE 220 to which the BE 225 is assigned). In some aspects, demodulating the signal recovers at least a portion of a packet (block 355). In some aspects, demodulating a signal and recovering at least a portion of a packet (*e.g.,* at least a portion of the frame modulated onto that signal) can comprise conventional operations known by a skilled artisan to demodulate such a signal and/or recover a packet therefrom.

In other cases, however, the BE 225 (and/or, more specifically, the receiver 240 thereof) can perform specific operations in accordance with some embodiments. Merely by way of example, a PHY 205 in accordance with some embodiments can be configured to prioritize the utility of BEs 225 to decode beacon packets. In such cases, the PHY 205, or a component thereof, such as the PHY controller 230, a BE 225, and/or a receiver 240 is able to determine that a packet is not of interest (*e.g.,* is not a beacon packet), the PHY 205 can best accomplish that function by terminating the demodulation of the signal on which that packet is modulated as quickly as possible, so that the BE 225 can be freed to recover another packet (e*.g.,* by demodulating a signal on a different channel received by a different FE).

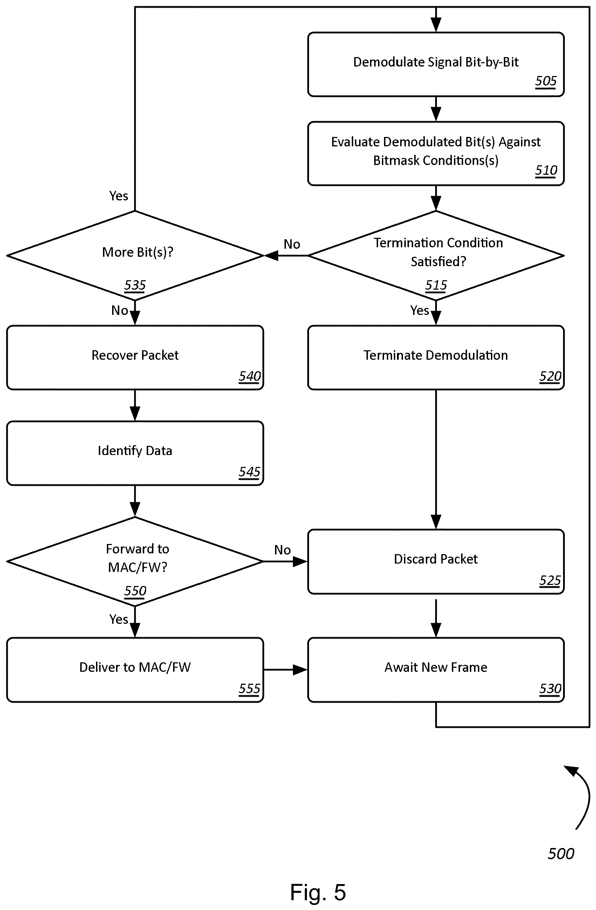

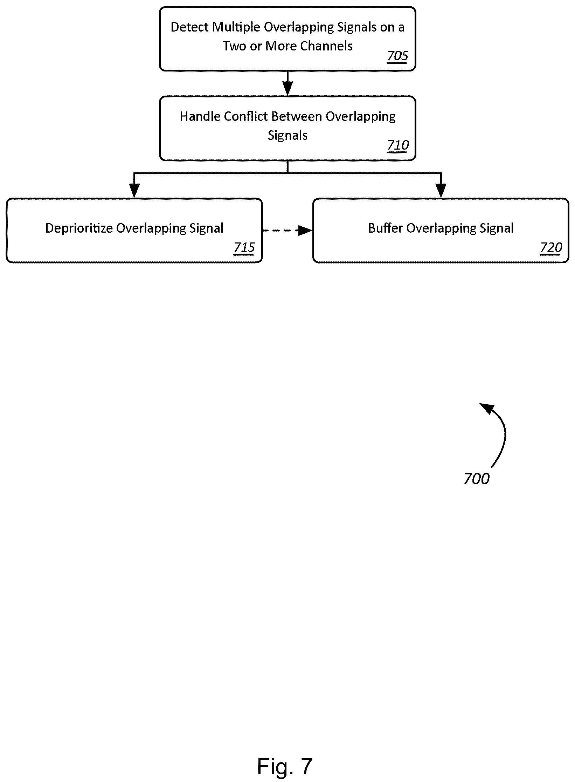

Thus, Figs. 5 and 7 illustrate two exemplary techniques that can enable the PHY 205 to better utilize the BEs 240 to recover packets of interest, *e.g.,* beacon frames, other management frames, etc. For example, Fig. 5 illustrates a method 500 of demodulating a signal and recovering at least a portion of a packet therefrom according to one set of embodiments. The method 500 comprises demodulating, *e.g.,* by a BE 225 and/or a receiver 240, the signal bit-by-bit. In some embodiments, this entails delivering bits (which might be only one bit in some cases) to the packet filter 245 as they are demodulated, enabling the PHY 205 (or a component thereof, such as the packet filter 245 or PHY controller 230) to evaluate one or more of the demodulated bits against one or more bitmask condition(s) (block 510) while the demodulation of the signal is ongoing. This evaluation can include comparing, masking, filtering, etc. the demodulated bit(s) with a bitmask using techniques known in the art.

To illustrate some of these techniques, Fig. 6 illustrates a High Throughput (HT) -mode wireless frame 600 in accordance with some embodiments. The frame 600 comprises a Frame Control (FC) field 605 (2 bytes), a Duration/ID filed 610 (2 Bytes), four address fields 615-625 and 635 (the first of which is 6 bytes and the remainder of which each can be 0 bytes or 6 bytes), a sequence control field (0 or 2 bytes), a Quality of Service (QoS) Control field 640 (0 or 2 bytes), an HT Control field 645 (0 or 2 bytes), a variable-length Frame Body 650 (which comprises the user data packet transported by the frame) and a Frame Check Sequence (FCS) field 655 (4 bytes). The fields prior to the Frame Body 650 (fields 605-645) make up the MAC header of the frame. Generally, a BE 225 (and/or a receiver 240) will demodulate these fields in order, starting with the first bit of the FC field 605 and ending with the last bit of the FCS field 655.

In accordance with some embodiments, for example, the BE 225 and/or receiver 240 can be configured to demodulate the first bit (or group of bits) of the 16-bit (2-byte) Frame Control field 605.

The method 500 further can comprise, at block 515, determining, *e.g.,* based at least in part on the evaluation of the demodulated bit(s) with a bitmask condition, whether a termination condition has been satisfied. If so, the method comprises terminating demodulation of that packet early (block 520) and discarding the portion of the demodulated packet (block 525). At this point, the method 500 comprises awaiting a new frame from one of the FEs 220 (which might be the same FE 220, or if the BE 225 / receiver 240 is reassigned in the interim, a different FE 220), at which point the method reiterates from block 505, starting with demodulating the first bit(s) of a new modulated frame received by that BE 225.

If the PHY 205, or a component thereof, such as the PHY controller 230, the BE 225 and/or the receiver 240, determines that no termination condition has been satisfied (*e.g.,* based on the comparison of the demodulated bit(s)), the method continues from block 535 where the demodulator 240 continues to demodulate the signal (reiterating from block 505), assuming there are more bits to be demodulated. If there are no more bits to demodulate, the method proceeds to block 540, discussed below. Using this technique, various embodiments can evaluate any number of demodulated bits with any one or more bitmask conditions to determine whether the packet meets one or more termination conditions.

As used herein, the term, "termination condition," means any rule or circumstance that indicates that demodulation of a particular packet should be terminated early (*i.e.,* before recovery of the entire packet) and/or that the packet should be discarded. Various embodiments can support a variety of termination conditions. As noted above, in some embodiments, a termination condition might specify that demodulation is terminated early as soon as the packet is identified as an unwanted packet, *e.g.,* a user data packet in situations where the PHY 205 is scanning for beacon packets or other management packets. In some embodiments, for example, the first two bits of the FC 605 field might indicate the protocol version of the frame 600, the next two bits might indicate the frame type (with 00 indicating a management frame), and the following four bits might indicate the frame subtype (with "1000" indicating a beacon frame). Thus, if the first eight bits of the FC field are "0000 1000," this can indicate that the protocol is 802.11a/b/g/n/ac/ax (because bits 0-1 are 00), the frame type is a management frame (because bits 2-3 are 00), and the frame subtype is a beacon frame (because bits 4-7 are "1000"). If the termination condition specifies termination of any non-beacon packet, the method 500 might comprise demodulating just enough bits to determine that the demodulated bits are not "0000 1000" (*e.g.,* by comparing the demodulated bits to a bitmask that requires "0000 1000" to avoid the termination condition). In this case, if the FC field 605 is "0000 0XXX XXXX XXXX," demodulation and evaluation of the lowest-order 11 bits is unnecessary, because the value 0 of bit five indicates that the frame is not a beacon frame, and demodulation can be terminated early after demodulating only the first five bits0. Likewise, if the FC field 605 is "001X XXXX XXXX XXXX," the demodulation can be terminated after only four bits (and the lowest-order 12 bits) because bit 3 indicates that the frame is not a management frame, so the frame cannot be a beacon frame.

As another example, if a termination condition specifies that only packets with a particular value in the RX Address field 615 are to be recovered, the first 32 bits are not material, but the method 500 might comprise comparing demodulating bits 33 through 80 individually (or in groups) and comparing the demodulated bits with a bitmask set to match the required Rx Address. As soon as a bit is demodulated that does not match the bitmask, the termination condition is satisfied, and demodulation of the packet can be terminated early.

Based on this disclosure, a skilled artisan will appreciate that termination conditions can be crafted, in different embodiments, to be satisfied by any combination of bits in any of the fields of the MAC header and even in the Frame Body, allowing both a great deal of flexibility in defining termination conditions and an efficient mechanism for terminating demodulation of a signal as early as possible to conserve the BE 225 / receiver 240 for prioritized operations (such as receiving beacons on other channels, assigning the BE 225 to another FE 220, etc.). Early termination can also save power.

Returning again to Fig. 5, the last bit of the packet is demodulated without encountering a termination condition (at block 535), the packet is recovered, *e.g.,* by the receiver 240 and/or, more generally the BE 225. In some embodiments, the recovery techniques can be similar to conventional techniques.

In some aspects, certain embodiments can include determining based on any set of bits in the frame, whether demodulation of a packet should be terminated. For example, the packet filter 245 can extract data from any field (*e.g.,* any of fields 605-645) of the MAC or PHY header, and even data from the frame body 650, can be used to filter packets through the early termination procedures described above, in which each bitmask can be considered a filter. In some embodiments, which use an "accept" mode, a packet is recovered (*i.e.,* not terminated early) if any of the filters declares a match. Other embodiments use a "reject" mode, in which a packet is accepted only if all filters declare a mismatch.

In addition, however, certain embodiments employ additional filtering based on any set of data associated with a recovered frame, including without limitation and of the fields above, as well as any tags associated with the frame. In such embodiments, for example, the method 500 can comprise, at block 545, identifying a set of data (such as a portion of one of the fields discussed above, one or more tags of interest associated with the recovered frame, etc. The packet filter 245 might identify, for example, a virtual LAN (VLAN) tag, such as a VLAN ID tag, a QoS tag, a Wi-Fi Multimedia Tag, and/or the like. The method 500 can further comprise determining, based at least in part on the data extracted from any field(s) and/or any identified tag (e.g., based on the presence of the tag, based on the value of the tag, etc.) whether to forward the packet to the MAC interface (block 550). If the packet should be forwarded to the MAC interface, the method comprises, at block 555, delivering the packet, *e.g.,* based on a determination that the packet should be forwarded, to the MAC interface for processing at higher levels of the stack. Conversely, if the packet should not be forwarded to the MAC interface, *e.g.,* based on a determination that the packet should not be forwarded, the method proceeds to block 525, and the packet is discarded (*e.g.,* not written to a first-in-first out (FIFO) buffer of the MAC interface). In either case, the method proceeds to block 530, where the BE 225 / receiver 240 awaits another signal from a FE 220, as described above. This can reduce the workload of the MAC layer, for example, discarding packets without a particular VLAN tag, packets directed toward a destination address not assigned to the wireless device, etc.

As noted above, managing communication between the FEs 220 and the BEs 225 can comprise handling a demodulation contention. Fig. 7 illustrates a method 700 that includes different techniques, which can be used together or separately, to handle a demodulation contention. The method 700 comprises detecting overlapping signals on two or more channels (block 705) and handling a conflict between the two or more overlapping signals (block 710). In an aspect, a conflict between overlapping signals can arise when two different FEs 220 receive a signal carrying a modulated frame (and in particular embodiments, a beacon frame) for which the same BE 225 is the appropriate BE to demodulate the signal (*e.g.,* based on the modulation of the signals, as described above), such that the BE 225 cannot process the first signal (*e.g.,* to recover or terminate demodulation of the frame) in time to process the second signal.

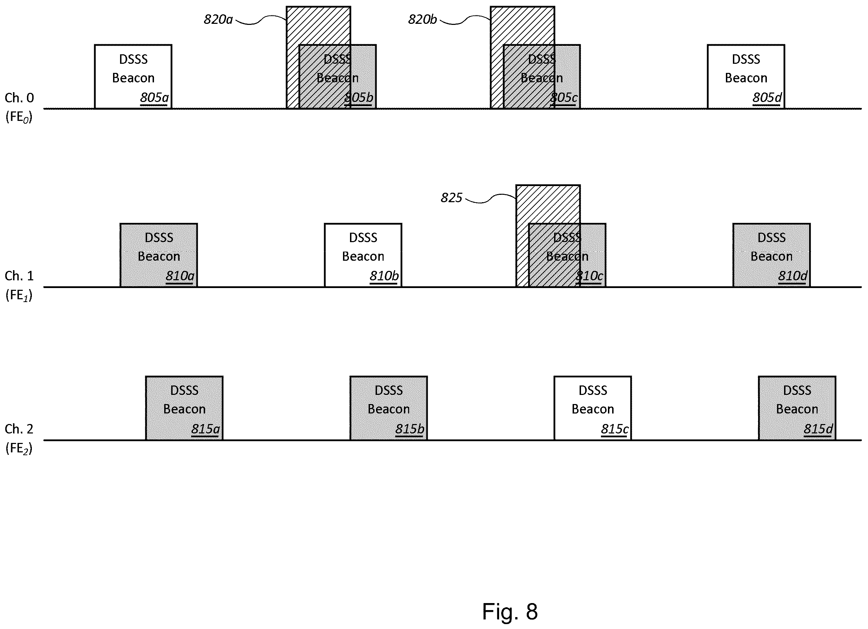

Such a situation is illustrated by Fig. 8, in which FE*₀* 220a receives a first signal on Ch. 0 carrying with a periodic beacon frame 805, while FE*₁* receives a second signal on Ch. 1 carrying a periodic beacon frame 810 and FE*₂* receives a third signal 815 on Ch. 2 carrying periodic beacon frame 815. As shown, in this example, all three signals are modulated with DSSS, such that the DSSS BE 225a is the appropriate BE to modulate each of the beacon frames 805-815.

The horizontal axis represents the passage of time, and the width of each of the beacon frames 805-815 represents the time required by the BE 225 to process that beacon frame. Thus, when a beacon 810a arrives on Ch. 1, the DSSS BE 225a has not yet finished processing the beacon 805a received earlier on Ch. 0. The same is true for the beacon 815a on Ch. 2. As such, beacons 810a and 815a cannot be processed and otherwise would be lost, as shown by the gray shading of beacons 810a and 815a.

In that situation, because the beacons 805, 810, 815 repeat periodically, the beacons 810 and 815 would always arrive during processing of the beacons 805 received at FE*₀*, and the device 200 would be unaware of the devices (*e.g.,* APs) broadcasting beacons on Ch. 1 and Ch. 2. This could result in suboptimal performance, *e.g.,* because the RSSI of one of those two signals on Ch. 1 and Ch. 2 is stronger than the RSSI of the signal on Ch. 0, the beacon might not be relevant to this particular device, etc.

In accordance with certain embodiments, handling a demodulation contention can comprise, at block 715, deprioritizing one or more of the signals for the duration of predicted or estimated arrival window after previously receiving a beacon in that signal. For example, in Fig. 8, the signal on Ch. 0 is deprioritized during an arrival window shown by hatched areas 820 after the arrival of the initial beacon 805a on Ch. 0, which is received and processed by the DSSS BE 225a (as shown by the lack of shading in of beacon 805a). In particular, the signal on Ch. 0 is blocked for an arrival window 820a that includes the arrival beacon 805b and third beacon 805c on Ch. 0. In some aspects, the beginning of the arrival window 820a is based on the estimated arrival of the next beacon 805b on Ch. 0, and the duration of the arrival window 820a is calculated to be sufficient to ensure that the next beacon 805b on that Ch. 0 does not prevent the appropriate demodulator 225a from processing an overlapping beacon (*e.g.,* beacon 810b) on a different channel. In the example illustrated by Fig. 8, arrival window 820a is shown as beginning shortly before the estimated arrival of beacon 805b (which can account for a situation in which the beacon 805b arrives before the estimated time of arrival) and lasts long enough to prevent the FE on that channel from detecting the beacon and/or otherwise prevents the appropriate demodulator from processing the beacon 805b. In some cases, for example, the arrival window 820a might last only long enough to prevent FE*₀* from detecting the beacon 805b (*e.g.,* to prevent a packet detector 560a from detecting a preamble of the beacon packet); in other cases, the duration of the arrival window 820a depending on the implementation.

Further while, as demonstrated above, the arrival window 820a can be implemented by modifying the behavior of FE*₀*, various embodiments might implement the arrival window using other techniques; for example, in some embodiments, a PHY controller might allow FE*₀* to detect the beacon 805b but instruct an appropriate multiplexer not to route that packet to a demodulator, etc. In other embodiments, a channel can be deprioritized by assigning (*e.g.,* with a PHY controller 230) the appropriate BE 225a to a FE (*e.g.,* FE*₁* 220b) tuned to a different channel. Other techniques are possible as well. In any case, by deprioritizing Ch. 0 (and/or FE*₀*), the PHY controller 230 prevents the appropriate BE 225a from processing that signal during the arrival window 820a, and the second and third beacons 805b and 805c on Ch. 0 are disregarded.

This leaves the BE 225a free to process the second beacon 810b on Ch. 1 (after missing the first beacon 810a on that channel). However, the processing of that beacon 810b prevents the processing of the beacon 815b on Ch. 2. Accordingly, the PHY controller 230 deprioritizes the signal on Ch. 1 for arrival window 825 (while also deprioritizing the signal on Ch. 0 for arrival window 820b) to allow the BE 225a to process the third beacon 815c on Ch. 2. By the time the fourth beacon 805d on Ch. 0 arrives, however, that signal is no longer deprioritized, and the BS 225 receives and processes that beacon 805d. This process can be repeated, which allows the PHY 205 to process beacons across all three of the channels in a balanced manner. The PHY controller 230, which as noted above, receives indications from each FE 220 when a modulated frame arrives, and from a BE if a beacon frame is recovered from the demodulated signal, can use that arrival information to estimate the time of arrival of beacons on each overlapping signal and schedule the arrival windows 820 and 825 appropriately.

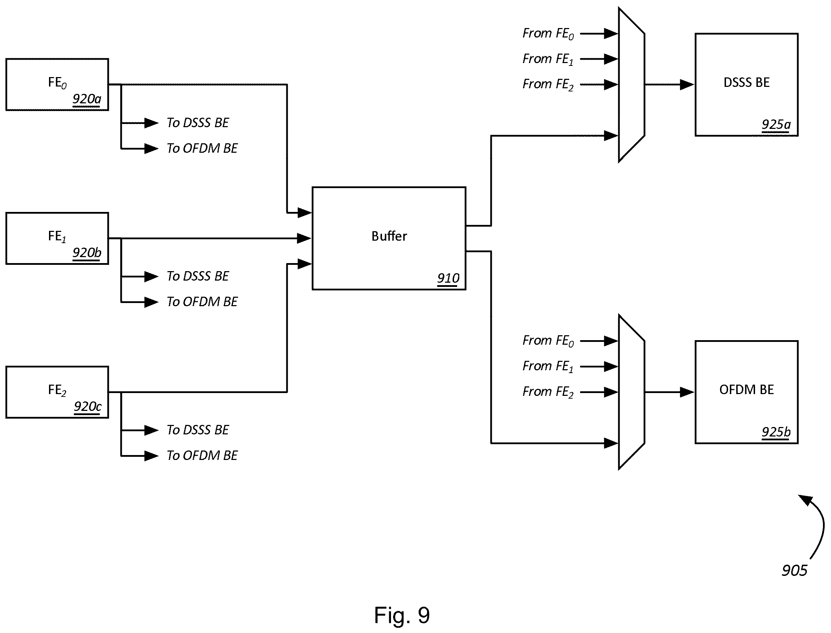

This solution works in situations in which the overlapping signals are periodic. To address other cases, however, the method 700 of Fig. 7 (and in particular, the operation of handling demodulation contentions resulting from signals on different channels overlapping in time) can further comprise allowing (or causing) a BE 225 to process (*e.g.,* demodulate or terminate) a frame from a signal on one channel while storing, at block 720, a signal received on a second channel (*e.g.,* storing the I/Q samples of the signal received on the second channel) in a buffer until the BE 225 has completed the processing of the frame on the first channel. Fig. 9 illustrates a simplified drawing of a PHY 905 that includes a buffer 910 for storing such signals in this way but omits other features not relevant in this context. Architecturally, other than the buffer 910 and the routing between the FEs 920, the buffer 910, and the BEs 925, the PHY 905 of Fig. 9 can be similar to the PHY 205 of Fig. 2 and can operate in a similar manner, *e.g.,* as described above. Many attributes of a signal can be stored along with the buffered signal, such as the signal strength (RSSI) of the signal, the time of signal arrival, and/or other information. One or more of these attributes can be used by the PHY controller 230 to decide priority for demodulating buffered packets. For example, the PHY controller might prioritize the earliest arrived packet, the higher RSSI packet, a packet detected on a specific channel, and/or other factors.

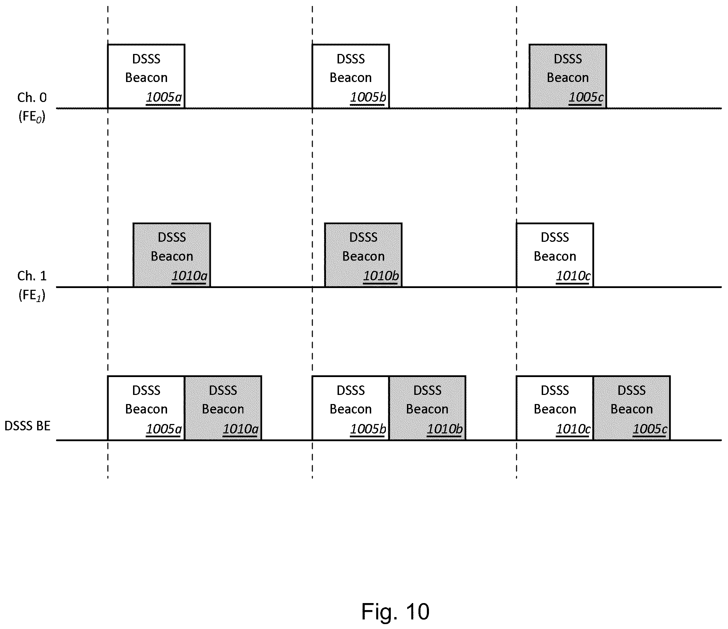

An example of a buffering technique to perform these operations, in accordance with some embodiments, is illustrated by Fig. 10, which depicts a timing diagram similar to that of Fig. 8, except that in the example illustrated in Fig. 10, beacons are received on only two channels (Ch. 0 and Ch. 1). Further, in this example, the arrival frequency of the respective beacons 1005 and 1010 is not as consistent as the beacons depicted on Fig. 8. At a first time, a beacon 1005a arrives on Ch. 0. Shortly thereafter (and before processing of that beacon 1005a has been completed), a beacon 1010a arrives on Ch. 1. The bottom line of Fig. 9 illustrates the processing of the beacons 1005 and 1010 as a function of time. As shown, the DSSS BE 225a processes the beacon 1005a received on Ch. 0 until that processing has completed (*e.g.,* when the beacon has been demodulated or terminated). The beacon 1010a on Ch. 1 is buffered until the BE 225 is finished demodulating the beacon 1005a received on Ch. 0, at which point the BS 225 begins processing beacon 1010a. (It should be noted, in this context, that processing the beacon can include, without limitation, demodulating the signal to recover the beacon frame, performing any post-demodulation processing, such as filtering, terminating demodulation early, etc., but that, in some embodiments, the demodulator of the BE 225a can begin demodulating another beacon 1010a immediately when the demodulator is finished with the prior beacon 1005a, even while post-demodulation processing of beacon 1005a is ongoing).

The same operations can occur at the arrival of beacons 1005b and 1010b. The careful reader will notice that the frequency of the 1010 beacons on Ch. 1 is higher than that of the beacons 1005 on Ch. 0. Moreover, there is some jitter in the frequency of the beacons on Ch. 0, causing beacon 1005c on Ch. 0 to arrive later than beacon 1010c on Ch. 1. Because the latter beacon 1010c arrived earlier, the PHY controller 230 assigns the BE 225a to Ch. 1, allowing processing of beacon 1010c to begin immediately upon arrival, and buffers beacon 1005c on Ch. 0 until the processing of beacon 1010c has been completed, at which point the processing of beacon 1005c begins.

This buffering technique therefore can be used regardless of the relative periodicity (or lack thereof) of packets (*e.g.,* beacons, etc.) received on different channels. Depending on the size of the buffer, beacons on any number of channels can be buffered until the appropriate BE 225 (or, more precisely, in some embodiments, the demodulator thereof) is free. A skilled artisan can understand from this disclosure that this buffering technique can be combined with the channel deprioritization technique described above to allow handling of demodulation contentions in more complex situations, although either technique can also be used alone.

### Exemplary Wireless Device

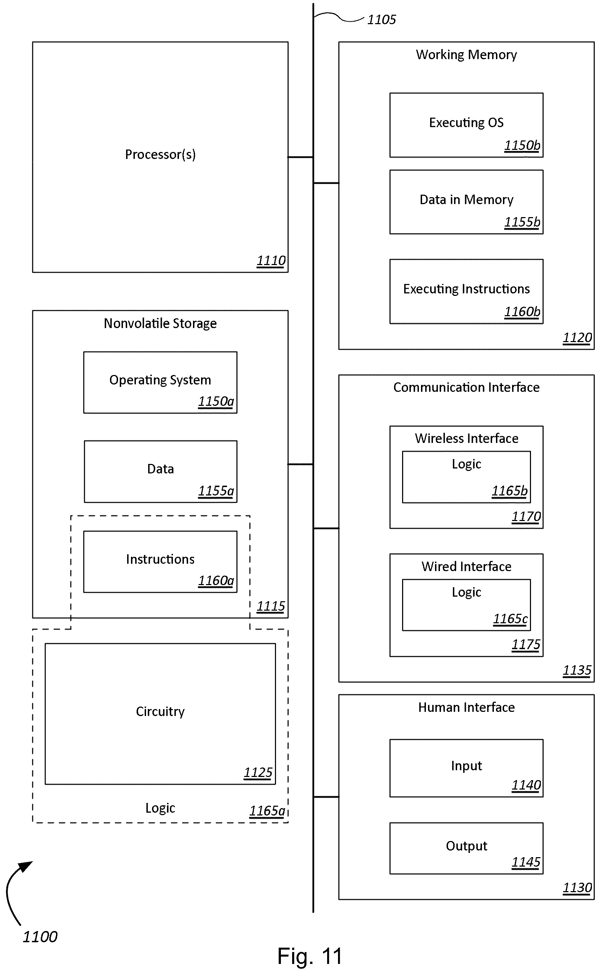

Fig. 11 is a block diagram illustrating an example of a device 1100, which can function as a wireless device (or a component of a wireless device), including without limitation the wireless devices 100 and 200 described above, in accordance with embodiments, and/or can function to perform some or all operations of the methods described herein. No component shown in Fig. 11 should be considered necessary or required by each embodiment. For example, many embodiments may not include a processor and/or might be implemented entirely in hardware or firmware circuitry. Similarly, many embodiments may not include input devices, output devices, or network interfaces.

With that prelude, as shown in Fig. 10, the device 1100 may include a bus 1105. The bus 1105 can include one or more components that enable wired and/or wireless communication among the components of the device 1100. The bus 1105 can couple together two or more components of Fig. 10, such as via operative coupling, communicative coupling, electronic coupling, and/or electric coupling. Such components can include a processor 1110, nonvolatile storage 1115, working memory (*e.g.,* system dynamic random-access memory (DRAM)) 1120, and/or circuitry 1125. In some cases, the system 1100 can include human interface components 1130 and/or a communication interface 1135.

While these components are displayed as integrated within the device 1100, certain components might be located externally from the device 1100. As such, the device 1100 might include, instead of or in addition to the components themselves, facilities for communicating with such external devices, which therefore can be considered part of the device 1100 in some embodiments.

Merely by way of example, the nonvolatile storage 1115 can include a hard disk drive (HDD), a solid-state drive (SSD), and/or any other form of persistent storage (*i.e.,* storage that does not require power to maintain the state of the stored data). While such storage often is incorporated within the device 1100 itself, such storage might be external to the device 1100 and can include external HDD, SSD, flash drives, or the like, as well as networked storage (*e.g.,* shared storage on a file server, etc.), storage on a storage area network (SAN), cloud-based storage, and/or the like. Unless the context dictates otherwise, any such storage can be considered part of the device 1100 in accordance with various embodiments. In an aspect, the storage 1115 can be non-transitory.

Similarly, the human interface 1130 can include input components 1140 and/or output components 1145, which can be disposed within the device 1100, external to the device 1100, and/or combinations thereof. The input components 1140 can enable the device 1100 to receive input, such as user input and/or sensed input. For example, the input components 1140 may include a touch screen, a keyboard, a keypad, a mouse, a button, a microphone, a switch, a sensor, a global positioning system sensor, an accelerometer, a gyroscope, and/or an actuator. In some cases, such components can be external to the device 1100 and/or can communicate with components internal to the device 1100 such as input jacks, USB ports, Bluetooth radios, and/or the like. Similarly, the output component 1145 can enable the device 1100 to provide output, such as via a display, a printer, a speaker, and/or the like, any of which can be internal to the device 1100 and/or external to the device but in communication with internal components, such as a USB port, a Bluetooth radio, a video port, and/or the like. Again, unless the context dictates otherwise, any such components can be considered part of the device 1100 in accordance with various embodiments.

From these examples, it should be appreciated that various embodiments can support a variety of arrangements of external and/or internal components, all of which can be considered part of the device 1100.

In an aspect, the nonvolatile storage 1115 can be considered a non-transitory computer readable medium. In some embodiments, the nonvolatile storage 1115 can be used to store software and/or data for use by the device 1100. Such software/data can include an operating system 1150a, data 1155a, and/or instructions 1160a. The operating system can include instructions governing the basic operation of the device 1100 and can include a variety of personal computer or server operating systems, embedded operating systems, and/or the like, depending on the nature of the device 1100. The data 1155a can include any of a variety of data used or produced by the device 1100 (and/or the operation thereof), such as media content, databases, documents, and/or the like. The instructions 1160a can include software code, such as applications, object code, assembly, binary, etc. used to program the processor 1110 to perform operations in accordance with various embodiments. In an aspect, the operating system 1150a can be considered part of the instructions 1160a in some embodiments. Copies of the operating system 1150b, data 1155b, and/or instructions 1160b can be stored in the working memory 1120 and/or executed by one or more processors1110.

The processor(s) 1110 can include one or more of a central processing unit, a graphics processing unit, a microprocessor, a controller, a microcontroller, a digital signal processor (DSP), programmable logic (such as a field-programmable gate array (FPGA) an erasable programmable logic device (EPLD), or the like), an application-specific integrated circuit (ASIC), a system on a chip (SoC) and/or another type of processing component. Each of the processor(s) 1110 can be implemented in hardware, firmware, or a combination of hardware, firmware and/or software. In some implementations, the processor(s) 1110 includes one or more processors capable of being programmed to perform one or more operations or processes described elsewhere herein.

For example, in some embodiments, the wireless device 1100 (or various components thereof, such as the PHY blocks described above, for example) can comprise logic. Such logic can be any sort of code, instructions, circuitry, or the like that can cause the device 1100 (or various subsystems or interfaces thereof, such as the wireless and wired interfaces 1170 and 1175 described below) to operate in accordance with the embodiments herein (*e.g.,* to perform some or all of the processes and/or operations described herein). Merely by way of example, the logic 1165 can include the instructions 1160, which might be stored on the nonvolatile storage 1115 as noted above, loaded into working memory 1120, and/or executed by the processor 1110 to perform operations and methods in accordance with various embodiments. In an aspect, these instructions 1160 can be considered to be programming the processor 1110 to operate according to such embodiments. In the same way, the operating system 1150 (to the extent it is discrete from the instructions 1160) might be stored on the nonvolatile storage 1115, loaded into working memory 1120, and/or executed by a processor 1110.

Alternatively, and/or additionally, logic can include the circuitry 1125 (*e.g.,* hardware or firmware), which can operate independently of, or collaboratively with, any processor 1110 the device 1100 might or might not have. (As noted above, in some cases, the circuitry 1150 itself can be considered a processor 1110.) The circuitry 1125 might be embodied by a chip, SoC, ASIC, programmable logic device (FPGA, EPLD, etc.), and/or the like. Thus, some or all of the logic enabling or causing the performance of some or all of the operations described herein might be encoded in hardware or firmware circuitry (*e.g.,* circuitry 1125) and executed directly by such circuitry or a dedicated or embedded processor 1110, rather than being software instructions 1160 loaded into working memory 1120. (In some cases, the logic 1165 can include, and/or various functionality of the device 1100 can be performed by execution of, hardware instructions or dedicated circuitry.) Thus, unless the context dictates otherwise, embodiments described herein are not limited to any specific combination of hardware, firmware, and/or software.

The device 1100 can also include a communication interface 1135, which can include, without limitation, one or more wireless interfaces 1170, which can enable the device to communicate with other devices wirelessly and/or over radio frequencies (RF), and/or one or more wired interfaces 1175. Which can enable the device 10 to communicate with other devices via a wired (*e.g.,* electrical and/or optical) connection. Wireless interfaces 1170 can include, without limitation, a Bluetooth interface, a Wi-Fi and/or WLAN interface, a 5G or cellular interface, a satellite interface, etc.). Such wireless interfaces 1170 and wired interfaces 1175 can include logic 1165b and1165c, respectively, including without limitation logic similar to, or coexistent with, the logic 1165, and or processors similar to the processors 1110 described above.

In a particular embodiment, for example, a wireless interface 1170 or wired interface 1175 might include logic corresponding to various layers of the Open Systems Interconnection (OSI) model. For example, a the logic of a wireless interface, can include a PHY block such as the PHY blocks 105, 205, and 905 described above, as well as a MAC layer such as the MAC layers 115, 215, described above, a radio such as the radios 110, 210 described above, any necessary modems, antennas, ports, etc., and/or logic implementing any higher layers in the OSI model, to the extent any such layers are not implemented in the logic of the device 1100 itself. In some embodiments, this logic 1165b, 1165c, or the interfaces 1170, 1175 themselves, can be implemented in combination, as discrete chips, as SoCs, and/or the like. Depending on the nature of the device 1100, the communication interface 1135 (and/or the wireless and wired interfaces 1165, 1170) can include any standard or proprietary components to allow communication as described in accordance with various embodiments.

### Various Aspects of Some Embodiments

In addition to the exemplary embodiments above, some embodiments can include any combination or sub-combination of the aspects discussed in the following examples. Moreover, some or all aspects of the embodiments described below can be combined with and/or implemented in the examples described above within the scope of the various embodiments. No single embodiment requires any particular combination of these aspects; by the same token, however, aspects described in different contexts should not necessarily be considered separate species or embodiments from one another.

Some embodiments provide a wireless device comprising a PHY block. In aspects of some embodiments, the PHY block can be a multi-channel scanning (referred to herein as "multi-scan") PHY block. In aspects of some embodiments, the PHY block can comprise M front-end blocks. In aspects of some embodiments, the PHY block can comprise N back-end blocks. In aspects of some embodiments, *M* and *N* might be integers greater than one. In aspects of some embodiments, *M* is greater than or equal to *N.*

In aspects of some embodiments, each of the front-end blocks is configured to (and/or comprises logic to) to detect signals on each of a plurality of channels. In aspects of some embodiments, each of the front-end blocks is configured to perform two-stage detection of signals. In aspects of some embodiments, detecting a signal on a channel, and/or performing two-stage detection of signals, can comprise detecting, *e.g.,* with one or more energy detectors, energy in the channel. In aspects of some embodiments, detecting a signal on a channel, and/or performing two-stage detection of signals, can comprise sensing, *e.g.,* with a packet detector, a carrier signal on the channel. In some aspects the carrier signal is sensed in response to detecting the energy on the channel. In aspects of some embodiments, the carrier signal is modulated with one of a plurality of modulations.

In aspects of some embodiments, each back-end block can comprise logic to demodulate a signal modulated with a respective one of the plurality of modulations. In aspects of some embodiments, each back-end block is configured to, and/or can comprise logic to, recover at least a portion of a packet from the demodulated signal. In aspects of some embodiments, each back-end block can comprise a packet filter.

In aspects of some embodiments, demodulating a signal comprises demodulating the signal bit-by-bit. In aspects of some embodiments, each of the back-end blocks comprises logic to evaluate one or more demodulated bits against one or more bitmask conditions. In some aspects this comparison is performed while demodulating the signal. In aspects of some embodiments, each back-end block comprises logic to determine whether to terminate demodulation of the signal before recovering an entire transmitted frame. In aspects of some embodiments, this determination is based on an evaluation of the one or more demodulated bits against the one or more bitmask conditions. In aspects of some embodiments, determining whether to terminate demodulation of the signal comprises determining whether the one or more demodulated bits satisfies one or more termination conditions.

In aspects of some embodiments, the PHY block comprises a PHY controller. In aspects of some embodiments, the PHY controller is configured to, and/or comprises logic to, manage communications between the front-end blocks and the back-end blocks. In some cases this logic comprises logic to receive, from a first front-end block, an indication of a signal having a first modulation. In aspects of some embodiments, the logic to manage communications between the front-end blocks and the back-end blocks comprises logic to assign the first front-end block to a first back-end block configured to receive signals having the first modulation. In aspects of some embodiments, this assignment is based at least in part on the indication.

In aspects of some embodiments, the PHY block further comprises *J* energy detectors. In aspects of some embodiments, each of the front-end blocks comprises at least one packet detector. In aspects of some embodiments, each of the front-end blocks comprises a front-end controller. In aspects of some embodiments, each front-end controller comprises logic to manage operation of that front-end block. In aspects of some embodiments, *J* and *M* are integers, and *J* is greater than or equal to *M.* In aspects of some embodiments, managing operation of a front-end block comprises directing operation of the respective front-end block, based on information about energy detected by one or more of the energy detectors. In aspects of some embodiments, *J* is equal to *M.*

In aspects of some embodiments, each of the front-end blocks comprises a respective one of the energy detectors. In aspects of some embodiments, each of the packet detectors comprises logic to compute a likelihood that a preamble of a packet received on a particular channel has a particular modulation. In aspects of some embodiments, each of the packet detectors comprises logic to detect a modulation of the packet based at least in part on the likelihood. In aspects of some embodiments, each of the packet detectors comprises logic to bias detection of the modulation toward the particular modulation. In aspects of some embodiments, each of the energy detectors comprises logic to generate information about signals received on a channel to which that energy detector is tuned. In aspects of some embodiments, the PHY controller further comprises logic to generate channel occupancy information about one or more channels based on the information about signals received on the one or more channels.

In aspects of some embodiments, managing communications between the front-end blocks and the back-end blocks comprises detecting signals on two or more channels. In aspects of some embodiments, managing communications between the front-end blocks and the back-end blocks comprises handling a demodulation contention resulting from detected signals.

In aspects of some embodiments, handling the demodulation contention comprises receiving a first beacon on a first channel. In aspects of some embodiments, handling the demodulation contention comprises determining one or more arrival windows for the first channel based on estimated times of arrival of one or more subsequent beacons on the first channel. In aspects of some embodiments, handling the demodulation contention comprises deprioritizing the first channel during the one or more arrival windows. In aspects of some embodiments, handling the demodulation contention comprises causing a back-end block to demodulate one or more second beacons arriving on one or more second channels during the one or more arrival windows.

In aspects of some embodiments, handling the demodulation contention comprises causing a back-end block to demodulate a first signal. In aspects of some embodiments, handling the demodulation contention comprises storing a second one or more signals in a buffer while the back-end block demodulates the first overlapping signal. In aspects of some embodiments, handling the demodulation contention comprises causing the back-end block to demodulate the second one or more signals after the back-end block has demodulated the first signal.

In aspects of some embodiments, demodulating the modulated signal recovers a transmitted frame from a wireless packet. In aspects of some embodiments, each of the plurality of back-end blocks further comprises logic to identify a set of data associated with the recovered frame. In aspects of some embodiments, the set of data comprises one or more tags associated with the recovered frame and/or at least a portion of one or more fields, *e.g.,* from a MAC header or a PHY header, of the recovered frame. In aspects of some embodiments, each of the plurality of back-end blocks further comprises logic to determine, based on the identified set of data, whether to forward the frame to a MAC interface.

Some embodiments provide a method. In aspects of some embodiments, a method comprises detecting one or more signals on a plurality of channels. In aspects of some embodiments, the method comprises demodulating at least one of the one or more signals to recover at least a portion of a packet.

In aspects of some embodiments, the detection is performed by a front-end block of a PHY block of a wireless device. In aspects of some embodiments, the demodulating is performed by a back-end block of the PHY block. In aspects of some embodiments, the wireless device and/or PHY block comprises M front-end blocks. In aspects of some embodiments, the wireless device and/or the PHY block comprises N back-end blocks. In aspects of some embodiments, *M* and *N* are integers. In aspects of some embodiments, *M* is greater than or equal to *N.*

In aspects of some embodiments, each of the front-end blocks is configured to detect signals on each of the plurality of channels. In aspects of some embodiments, detecting one or more signals comprises detecting, by one of the front-end blocks, energy on one of the plurality of channels. In aspects of some embodiments, detecting one or more signals comprises sensing, by the front-end block, a carrier signal, modulated with one of a plurality of modulations, on the channel. In aspects of some embodiments, the sensing is performed in response to detecting energy on the channel.

In aspects of some embodiments, each of the back-end blocks comprises a packet filter. In aspects of some embodiments, demodulating at least one of the one or more signals comprises demodulating the signal bit-by-bit. In aspects of some embodiments, the method further comprises evaluating, with the packet filter and while demodulating the signal, one or more demodulated bits against one or more bitmask conditions. In aspects of some embodiments, the method comprises determining, based on an evaluation of the one or more demodulated bits against the one or more bitmask conditions, whether to terminate demodulation of the signal before demodulating an entire transmitted frame.

In aspects of some embodiments, demodulating the modulated signal recovers a transmitted frame from a wireless packet. In aspects of some embodiments, the method further comprises identifying a set of data associated with the recovered frame. In aspects of some embodiments, the set of data comprises one or more tags in the recovered frame and/or at least a portion of one or more fields from of the recovered frame. In aspects of some embodiments, the method further comprises determining, based on the identified set of data, whether to forward the recovered frame to a MAC interface.

In aspects of some embodiments, the method comprises managing, with a PHY controller of the PHY block, communications between the front-end blocks and the back-end blocks. In aspects of some embodiments, managing communications between the front-end blocks and the back-end blocks comprises receiving, by the PHY controller and from a first front-end block, an indication of a signal having a first modulation. In aspects of some embodiments, managing communications between the front-end blocks and the back-end blocks comprises assigning, by the PHY controller, the first front-end block to a first back-end block configured to receive signals having the first modulation. In aspects of some embodiments, this assignment is based at least in part on the indication. In aspects of some embodiments, managing communications between the front-end blocks and the back-end blocks comprises detecting two or more overlapping signals on a single channel.

In aspects of some embodiments, the PHY block further comprises *J* energy detectors. In aspects of some embodiments, each of the front-end blocks comprises at least one packet detector. In aspects of some embodiments, each of the front-end blocks comprises a front-end controller. In aspects of some embodiments, the method further comprises directing, with each of the front-end controllers, operation of that respective front-end block, based on information about energy detected by one or more of the energy detectors.

In aspects of some embodiments, *J* and *M* are integers, and *J* is greater than or equal to *M.* In aspects of some embodiments, managing operation of a front-end block comprises directing operation of the respective front-end block, based on information about energy detected by one or more of the energy detectors. In aspects of some embodiments, *J* is equal to *M.*

In aspects of some embodiments, each of the front-end blocks comprises a respective one of the energy detectors. In aspects of some embodiments, each of the packet detectors comprises logic to compute a likelihood that a preamble of a packet received on a particular channel has a particular modulation. In aspects of some embodiments, each of the packet detectors comprises logic to detect a modulation of the packet based at least in part on the likelihood. In aspects of some embodiments, each of the packet detectors comprises logic to bias detection of the modulation toward the particular modulation. In aspects of some embodiments, each of the energy detectors comprises logic to generate information about signals received on a channel to which that energy detector is tuned. In aspects of some embodiments, the PHY controller further comprises logic to generate channel occupancy information about one or more channels based on the information about signals received on the one or more channels.

In aspects of some embodiments, managing communications between the front-end blocks and the back-end blocks comprises receiving a first beacon on a first channel. In aspects of some embodiments, managing communications between the front-end blocks and the back-end blocks comprises determining one or more arrival windows for the first channel based on estimated times of arrival of one or more subsequent beacons on the first channel. In aspects of some embodiments, managing communications between the front-end blocks and the back-end blocks comprises deprioritizing the first channel during the one or more arrival windows. In aspects of some embodiments, managing communications between the front-end blocks and the back-end blocks comprises causing a back-end block to demodulate one or more second beacons arriving on one or more second channels during the one or more arrival window.

In aspects of some embodiments, managing communications between the front-end blocks and the back-end blocks comprises causing a back-end block to demodulate a first signal. In aspects of some embodiments, storing a second one or more signals in a buffer while the back-end block demodulates the first signal In aspects of some embodiments, causing the back-end block to demodulate the second one or more signals after the back-end block has demodulated the first signal.

### Conclusion

In the foregoing description, for the purposes of explanation, numerous details are set forth to provide a thorough understanding of the described embodiments. It will be apparent to one skilled in the art, however, that other embodiments may be practiced without some of these details. In other instances, structures and devices are shown in block diagram form without full detail for the sake of clarity. Several embodiments are described herein, and while various features are ascribed to different embodiments, it should be appreciated that the features described with respect to one embodiment may be incorporated with other embodiments as well. By the same token, however, no single feature or features of any described embodiment should be considered essential to every embodiment of the invention, as other embodiments of the invention may omit such features.

Thus, the foregoing description provides illustration and description of some features and aspect of various embodiments, but it is not intended to be exhaustive or to limit the embodiments in general to the precise form disclosed. One skilled in the art will recognize that modifications may be made in light of the above disclosure or may be acquired from practice of the implementations, all of which can fall within the scope of various embodiments. For example, as noted above, the methods and processes described herein may be implemented using software components, firmware and/or hardware components (including without limitation processors, other hardware circuitry, custom integrated circuits (ICs), programmable logic, etc.), and/or any combination thereof.

Further, while various methods and processes described herein may be described with respect to particular structural and/or functional components for ease of description, methods provided by various embodiments are not limited to any particular structural and/or functional architecture but instead can be implemented in any suitable hardware configuration. Similarly, while some functionality is ascribed to one or more system components, unless the context dictates otherwise, this functionality can be distributed among various other system components in accordance with the several embodiments.

Likewise, while the procedures of the methods and processes described herein are described in a particular order for ease of description, unless the context dictates otherwise, various procedures may be reordered, added, and/or omitted in accordance with various embodiments. Moreover, the procedures described with respect to one method or process may be incorporated within other described methods or processes; likewise, system components described according to a particular structural architecture and/or with respect to one system may be organized in alternative structural architectures and/or incorporated within other described systems. Hence, while various embodiments are described with or without some features for ease of description and to illustrate aspects of those embodiments, the various components and/or features described herein with respect to a particular embodiment can be substituted, added and/or subtracted from among other described embodiments, unless the context dictates otherwise.

As used herein, the term "component" is intended to be broadly construed as hardware, firmware, software, or a combination of any of these. It will be apparent that systems and/or methods described herein may be implemented in different forms of hardware, firmware, and/or a combination of hardware and software. The actual specialized control hardware or software code used to implement these systems and/or methods does not limit any embodiments unless specifically recited in the claims below. Thus, when the operation and behavior of the systems and/or methods are described herein without reference to specific software code, one skilled in the art would understand that software and hardware can be used to implement the systems and/or methods based on the description herein.

In this disclosure, when an element is referred to herein as being "connected" or "coupled" to another element, it is to be understood that one element can be directly connected to the other element or have intervening elements present between the elements. In contrast, when an element is referred to as being "directly connected" or "directly coupled" to another element, it should be understood that no intervening elements are present in the "direct" connection between the elements. However, the existence of a direct connection does not preclude other connections, in which intervening elements may be present. Similarly, while the methods and processes described herein may be described in a particular order for ease of description, it should be understood that, unless the context dictates otherwise, intervening processes may take place before and/or after any portion of the described process, and, as noted above, described procedures may be reordered, added, and/or omitted in accordance with various embodiments.

In this application, the use of the singular includes the plural unless specifically stated otherwise, and use of the term "and" means "and/or" unless otherwise indicated. Also, as used herein, the term "or" is intended to be inclusive when used in a series and also may be used interchangeably with "and/or," unless explicitly stated otherwise (*e.g.,* if used in combination with "either" or "only one of"). Moreover, the use of the term "including," as well as other forms, such as "includes" and "included," should be considered non-exclusive. Also, terms such as "element" or "component" encompass both elements and components comprising one unit and elements and components that comprise more than one unit, unless specifically stated otherwise. As used herein, the phrase "at least one of" preceding a series of items, with the term "and" or "or" to separate any of the items, modifies the list as a whole, rather than each member of the list (*i.e.,* each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C," or alternatively, "at least one of A, at least one of B, and at least one of C," it is expressly described as such.

Unless otherwise indicated, all numbers used herein to express quantities, dimensions, and so forth should be understood as being modified in all instances by the term "about." As used herein, the articles "a" and "an" are intended to include one or more items and may be used interchangeably with "one or more." Similarly, as used herein, the article "the" is intended to include one or more items referenced in connection with the article "the" and may be used interchangeably with "the one or more." As used herein, the term "set" is intended to include one or more items (*e.g.,* related items, unrelated items, a combination of related and unrelated items, and/or the like), and may be used interchangeably with "one or more." Where only one item is intended, the phrase "only one" or similar language is used. As used herein, the terms "has," "have," "having," or the like are intended to be open-ended terms. Further, the phrase "based on" is intended to mean "based, at least in part, on" unless explicitly stated otherwise. In the foregoing description, satisfying a threshold may, depending on the context, refer to a value being greater than the threshold, greater than or equal to the threshold, less than the threshold, less than or equal to the threshold, equal to the threshold, and/or the like, depending on the context.

Although particular combinations of features are recited in the claims and/or disclosed in the specification, these combinations are not intended to limit the disclosure of various implementations. In fact, many of these features may be combined in ways not specifically recited in the claims and/or disclosed in the specification. Thus, while each dependent claim listed below may directly depend on only one claim, the disclosure of various implementations includes each dependent claim in combination with every other claim in the claim set. No element, act, or instruction used herein should be construed as critical or essential unless explicitly described as such.

The invention further comprises the following embodiments:
1. A wireless device comprising a multi-scan PHY block, the PHY block comprising:
   *M* front-end blocks, each comprising logic to detect modulated signals on each of a plurality of channels;
   *N* back-end blocks, each comprising logic to demodulate a signal modulated with a respective modulation, wherein *M* and *N* are integers and *M* is greater than *N*; and
   a PHY controller comprising logic to manage communications between the front-end blocks and the back-end blocks.
2. The device of embodiment 1, wherein:
   the PHY block further comprises:
      *J* energy detectors;
   each of the front-end blocks comprises:
      at least one packet detector; and
      a front-end controller comprising logic to manage operation of that front-end block;
   *J* and M are integers, and *J* is greater than or equal to *M*; and
   managing operation of a front-end block comprises:
      directing operation of the respective front-end block, based on information about energy detected by one or more of the energy detectors.
3. The device of embodiment 2, wherein:
   *J* is equal to *M*; and
   each of the front-end blocks comprises a respective one of the energy detectors.
4. The device of embodiment 2, wherein each of the packet detectors comprises:
   logic to compute a likelihood that a preamble of a packet received on a particular channel has a particular modulation;
   logic to detect a modulation of the packet based at least in part on the likelihood; and
   logic to bias detection of the modulation toward the particular modulation.
5. The device of embodiment 4, wherein:
   each of the energy detectors comprises logic to generate information about signals received on a channel to which that energy detector is tuned; and
   the PHY controller further comprises logic to generate channel occupancy information about one or more channels based on the information about signals received on the one or more channels.
6. The device of embodiment 1, wherein each of the plurality of back-end blocks further comprises:
   a packet filter.
7. The device of embodiment 1, wherein:
   the logic to demodulate the signal comprises logic to demodulate the signal bit-by-bit; and
   each of the plurality of back-end blocks further comprises:
      logic to evaluate, while demodulating the signal, one or more demodulated bits against one or more bitmask conditions; and
      logic to determine, based on an evaluation of the one or more demodulated bits against the one or more bitmask conditions, whether to terminate demodulation of the signal before demodulating an entire wireless packet, based at least in part on whether the one or more demodulated bits satisfies one or more termination conditions.
8. The device of embodiment 1, wherein:
   demodulating the modulated signal recovers a transmitted frame from a wireless packet;
   each of the plurality of back-end blocks further comprises:
      logic to identify a set of data associated with the recovered frame, the set of data comprising:
         one or more tags in the recovered frame; or
         at least a portion of one or more fields from of the recovered frame; and
      logic to determine, based on the identified set of data, whether to forward the recovered frame to a MAC interface.
9. The device of embodiment 1, wherein the logic to manage communications between the front-end blocks and the back-end blocks comprises:
   logic to receive, from a first front-end block, an indication of a signal having a first modulation; and
   logic to assign, based at least in part on the indication, the first front-end block to a first back-end block configured to receive signals having the first modulation.
10. The device of embodiment 1, wherein managing communications between the front-end blocks and the back-end blocks comprises:
   detecting signals on two or more channels; and
   handling a demodulation contention resulting from detected signals.
11. The device of embodiment 10, wherein:
   handling the demodulation contention comprises:
   receiving a first beacon on a first channel; and
   determining one or more arrival windows for the first channel based on estimated times of arrival of one or more subsequent beacons on the first channel;
   deprioritizing the first channel during the one or more arrival windows; and
   causing a back-end block to demodulate one or more second beacons arriving on one or more second channels during the one or more arrival windows.
12. The device of embodiment 10, wherein:
   handling the demodulation contention comprises:
   causing a back-end block to demodulate a first signal; and
   storing a second one or more signals in a buffer while the back-end block demodulates the first overlapping signal; and
   causing the back-end block to demodulate the second one or more signals after the back-end block has demodulated the first signal.
13. A method, comprising:
   detecting, with a front-end block of a PHY block of a wireless device, one or more signals on a plurality of channels, the PHY block comprising:
      *M* front-end blocks, each configured to detect signals on each of the plurality of channels;
      *N* back-end blocks, each comprising logic to demodulate a signal modulated with a respective modulation, wherein *M* and *N* are integers and *M* is greater than *N*; and
      a PHY controller;
   managing, with the PHY controller, communications between the front-end blocks and the back-end blocks; and
   demodulating, with one of the back-end blocks, at least one of the one or more signals.
14. The method of embodiment 13, wherein:
   the PHY block comprises:
      *J* energy detectors; and
   each of the front-end blocks comprises:
      at least one packet detector; and
      a front-end controller;
   *J* and *M* are integers, and *J* is greater than or equal to *M*; and
   the method further comprises:
      directing, with each of the front-end controllers, operation of a respective front-end block, based on information about energy detected by one or more of the energy detectors.
15. The method of embodiment 13, wherein:
   demodulating at least one of the one or more signals comprises demodulating the signal bit-by-bit;
   each of the back-end blocks comprises a packet filter, and
   the method further comprises:
      evaluating, with the packet filter and while demodulating the signal, one or more demodulated bits against one or more bitmask conditions; and
      determining, based on an evaluation of the one or more demodulated bits against the one or more bitmask conditions, whether to terminate demodulation of the signal before demodulating an entire wireless packet.
16. The method of embodiment 15, wherein:
   demodulating the modulated signal recovers a transmitted frame from a wireless packet; and
   the method further comprises:
      identifying a set of data associated with the recovered frame, the set of data comprising:
         one or more tags in the recovered frame; or
         at least a portion of one or more fields from of the recovered frame; and
      determining, based on the identified set of data, whether to forward the recovered frame to a MAC interface.
17. The method of embodiment 16, wherein managing communications between the front-end blocks and the back-end blocks comprises:
   receiving, by the PHY controller and from a first front-end block, an indication of a signal having a first modulation; and
   assigning, by the PHY controller and based at least in part on the indication, the first front-end block to a first back-end block configured to receive signals having the first modulation.
18. The method of embodiment 13, wherein managing communications between the front-end blocks and the back-end blocks comprises:
   receiving a first beacon on a first channel; and
   determining one or more arrival windows for the first channel based on estimated times of arrival of one or more subsequent beacons on the first channel;
   deprioritizing the first channel during the one or more arrival windows; and
   causing a back-end block to demodulate one or more second beacons arriving on one or more second channels during the one or more arrival window.
19. The method of embodiment 13, wherein managing communications between the front-end blocks and the back-end blocks comprises:
   causing a back-end block to demodulate a first signal;
   storing a second one or more signals in a buffer while the back-end block demodulates the first signal; and
   causing the back-end block to demodulate the second one or more signals after the back-end block has demodulated the first signal.
20. A multi-scan PHY block of a wireless device, the multi-scan PHY block comprising:
   *M* front-end blocks, each comprising:
      a detector comprising logic to detect signals on each of a plurality of channels, wherein detecting a signal on a channel comprises:
      detecting energy the channel; and
      sensing, in response to detecting energy on the channel, a modulation of a carrier signal on the channel;
   *N* back-end blocks, each comprising:
      a packet filter; and
      logic to demodulate a signal modulated having one of the plurality of modulations; and
      wherein demodulating a signal comprises:
         demodulating the signal bit-by-bit;
         evaluating, while demodulating the signal, one or more demodulated bits against one or more bitmask conditions; and
      logic to determine, based on an evaluation of the one or more demodulated bits against the one or more bitmask conditions, whether to terminate demodulation of the signal before demodulating an entire frame;
   a PHY controller comprising:
      logic to manage communications between the front-end blocks and the back-end blocks, comprising:
      logic to receive, from a first front-end block, an indication of a signal having a first modulation; and
      logic to assign, based at least in part on the indication, the first front-end block to a first back-end block configured to receive signals having the first modulation;
   wherein *M* and *N* are integers and *M* is greater than *N.*

## Claims

1. A wireless device comprising a multi-scan PHY block, the PHY block comprising:
*M* front-end blocks, each comprising logic to detect modulated signals on each of a plurality of channels;
*N* back-end blocks, each comprising logic to demodulate a signal modulated with a respective modulation, wherein *M* and *N* are integers and *M* is greater than *N*; and
a PHY controller comprising logic to manage communications between the front-end blocks and the back-end blocks.

2. The device of claim 1, wherein:
the PHY block further comprises:
*J* energy detectors;
each of the front-end blocks comprises:
at least one packet detector; and
a front-end controller comprising logic to manage operation of that front-end block;
*J* and *M* are integers, and *J* is greater than or equal to *M*; and
managing operation of a front-end block comprises:
directing operation of the respective front-end block, based on information about energy detected by one or more of the energy detectors.

3. The device of claim 2, wherein:
*J* is equal to *M*; and
each of the front-end blocks comprises a respective one of the energy detectors.

4. The device of claim 2 or claim 3, wherein each of the packet detectors comprises:
logic to compute a likelihood that a preamble of a packet received on a particular channel has a particular modulation;
logic to detect a modulation of the packet based at least in part on the likelihood; and
logic to bias detection of the modulation toward the particular modulation,
and/or wherein:
each of the energy detectors comprises logic to generate information about signals received on a channel to which that energy detector is tuned; and
the PHY controller further comprises logic to generate channel occupancy information about one or more channels based on the information about signals received on the one or more channels.

5. The device of one of claims 1 to 4, wherein each of the plurality of back-end blocks further comprises:
a packet filter
and/or wherein:
the logic to demodulate the signal comprises logic to demodulate the signal bit-by-bit; and
each of the plurality of back-end blocks further comprises:
logic to evaluate, while demodulating the signal, one or more demodulated bits against one or more bitmask conditions; and
logic to determine, based on an evaluation of the one or more demodulated bits against the one or more bitmask conditions, whether to terminate demodulation of the signal before demodulating an entire wireless packet, based at least in part on whether the one or more demodulated bits satisfies one or more termination conditions.

6. The device of one of claims 1 to 5, wherein:
demodulating the modulated signal recovers a transmitted frame from a wireless packet;
each of the plurality of back-end blocks further comprises:
logic to identify a set of data associated with the recovered frame, the set of data comprising:
one or more tags in the recovered frame; or
at least a portion of one or more fields from of the recovered frame; and
logic to determine, based on the identified set of data, whether to forward the recovered frame to a MAC interface,
and/or wherein the logic to manage communications between the front-end blocks and the back-end blocks comprises:
logic to receive, from a first front-end block, an indication of a signal having a first modulation; and
logic to assign, based at least in part on the indication, the first front-end block to a first back-end block configured to receive signals having the first modulation.

7. The device of one of claims 1 to 6, wherein managing communications between the front-end blocks and the back-end blocks comprises:
detecting signals on two or more channels; and
handling a demodulation contention resulting from detected signals.

8. The device of claim 7, wherein:
handling the demodulation contention comprises:
receiving a first beacon on a first channel; and
determining one or more arrival windows for the first channel based on estimated times of arrival of one or more subsequent beacons on the first channel;
deprioritizing the first channel during the one or more arrival windows; and
causing a back-end block to demodulate one or more second beacons arriving on one or more second channels during the one or more arrival windows,
and/or wherein:
handling the demodulation contention comprises:
causing a back-end block to demodulate a first signal; and
storing a second one or more signals in a buffer while the back-end block demodulates the first overlapping signal; and
causing the back-end block to demodulate the second one or more signals after the back-end block has demodulated the first signal.

9. A method, comprising:
detecting, with a front-end block of a PHY block of a wireless device, one or more signals on a plurality of channels, the PHY block comprising:
*M* front-end blocks, each configured to detect signals on each of the plurality of channels;
*N* back-end blocks, each comprising logic to demodulate a signal modulated with a respective modulation, wherein *M* and *N are* integers and *M* is greater than *N*; and
a PHY controller;
managing, with the PHY controller, communications between the front-end blocks and the back-end blocks; and
demodulating, with one of the back-end blocks, at least one of the one or more signals.

10. The method of claim 9, wherein:
the PHY block comprises:
*J* energy detectors; and
each of the front-end blocks comprises:
at least one packet detector; and
a front-end controller;
*J* and *M* are integers, and *J* is greater than or equal to *M*; and
the method further comprises:
directing, with each of the front-end controllers, operation of a respective front-end block, based on information about energy detected by one or more of the energy detectors.

11. The method of claim 9 or claim 10, wherein:
demodulating at least one of the one or more signals comprises demodulating the signal bit-by-bit;
each of the back-end blocks comprises a packet filter, and
the method further comprises:
evaluating, with the packet filter and while demodulating the signal, one or more demodulated bits against one or more bitmask conditions; and
determining, based on an evaluation of the one or more demodulated bits against the one or more bitmask conditions, whether to terminate demodulation of the signal before demodulating an entire wireless packet.

12. The method of one of claims 9 to 11, wherein:
demodulating the modulated signal recovers a transmitted frame from a wireless packet; and
the method further comprises:
identifying a set of data associated with the recovered frame, the set of data comprising:
one or more tags in the recovered frame; or
at least a portion of one or more fields from of the recovered frame; and
determining, based on the identified set of data, whether to forward the recovered frame to a MAC interface.

13. The method of one of claims 9 to 12, wherein managing communications between the front-end blocks and the back-end blocks comprises:
receiving, by the PHY controller and from a first front-end block, an indication of a signal having a first modulation; and
assigning, by the PHY controller and based at least in part on the indication, the first front-end block to a first back-end block configured to receive signals having the first modulation,
and/or wherein managing communications between the front-end blocks and the back-end blocks comprises:
receiving a first beacon on a first channel; and
determining one or more arrival windows for the first channel based on estimated times of arrival of one or more subsequent beacons on the first channel;
deprioritizing the first channel during the one or more arrival windows; and
causing a back-end block to demodulate one or more second beacons arriving on one or more second channels during the one or more arrival window.

14. The method of one of claims 9 to 13, wherein managing communications between the front-end blocks and the back-end blocks comprises:
causing a back-end block to demodulate a first signal;
storing a second one or more signals in a buffer while the back-end block demodulates the first signal; and
causing the back-end block to demodulate the second one or more signals after the back-end block has demodulated the first signal.

15. A multi-scan PHY block of a wireless device, the multi-scan PHY block comprising:
*M* front-end blocks, each comprising:
a detector comprising logic to detect signals on each of a plurality of channels, wherein detecting a signal on a channel comprises:
detecting energy the channel; and
sensing, in response to detecting energy on the channel, a modulation of a carrier signal on the channel;
*N* back-end blocks, each comprising:
a packet filter; and
logic to demodulate a signal modulated having one of the plurality of modulations; and
wherein demodulating a signal comprises:
demodulating the signal bit-by-bit;
evaluating, while demodulating the signal, one or more demodulated bits against one or more bitmask conditions; and
logic to determine, based on an evaluation of the one or more demodulated bits against the one or more bitmask conditions, whether to terminate demodulation of the signal before demodulating an entire frame;
a PHY controller comprising:
logic to manage communications between the front-end blocks and the back-end blocks, comprising:
logic to receive, from a first front-end block, an indication of a signal having a first modulation; and
logic to assign, based at least in part on the indication, the first front-end block to a first back-end block configured to receive signals having the first modulation;
wherein *M* and *N* are integers and *M* is greater than *N.*
